# EUROPEAN PATENT APPLICATION

(11) **EP 3 200 397 A1**
(43) Date of publication of application: **02.08.2017**
(21) Application number: 14906963.5
(22) Date of filing: 27.11.2014
(51) Int. Cl.: H04L 12/26

(54) **VIRTUAL NETWORK POLICY CONFIGURATION METHOD AND SYSTEM, AS WELL AS VIRTUAL NETWORK ELEMENT AND NETWORK MANAGEMENT SYSTEM THEREOF**

(71) Applicant: Huawei Technologies Co. Ltd., Shenzhen, Guangdong 518129 (CN)
(72) Inventor: ZHAO, Dong, Shenzhen Guangdong 518129 (CN)
(74) Representative: Thun, Clemens
(86) International application number: PCT/CN2014/092344
(87) International publication number: WO 2016/082143

(57) **Abstract**

This application provides a virtual network policy configuration method and system, and a virtual network element and a network administration system thereof. The virtual network element includes: a receiving module, configured to receive policy configuration information; and a processing module, configured to perform service control according to the policy configuration information received by the receiving module. Different virtual network elements in this application can receive specific policy configuration information and perform separate configuration, so as to resolve a technical problem that in the prior art, when virtualized deployment is performed, a system needs to perform unified and coordinated processing on all virtual network elements, resulting in low efficiency and slow deployment. In this application, a system resource is allocated and used more properly, and additionally a specific configuration catalog is refined by using policy configuration information, so that NFV deployment can be performed quickly and effectively, thereby increasing virtualization efficiency to a great extent, so as to quickly respond to and process a related service.

## Description

### TECHNICAL FIELD

This application relates to the field of network technologies, and in particular, to a virtual network policy configuration method and configuration system for NFV (Network Function virtualization, network function virtualization), and further relates to a virtual network element in the configuration system and a network administration system in the configuration system.

### BACKGROUND

With development of communications network virtualization technologies, a basic architecture of a communications network virtualization system has been established. Based on a virtualized system (such as a cloud system), an NFVO (Network Function Virtualization Orchestrator, network function virtualization orchestrator) organizes and orchestrates different virtual network elements, such as a VNF (Virtual Network Function, virtual network function), to implement virtualized deployment of different types of networks, finally implementing a system in which different network hardware is deployed for existing requirements at different locations according to different functions to implement different network services.

The foregoing organization and orchestration can implement deployment of a virtual network element by using a software cloud deployment method, and are not limited by manpower and hardware types, so that low-cost, dynamic, and quick network deployment can be implemented. In addition, in an operation process, performance and a type of a currently-deployed network can be changed at any time according to different network performance requirements or according to requirements for different types of networks, so that a flexible service capability is provided for an operator more effectively. However, currently when virtualized deployment is performed, a system needs to perform unified and coordinated processing on all virtual network elements, and ignores that different virtual network elements may have different requirements, resulting in low efficiency and slow deployment.

### SUMMARY

For the foregoing technical problem, embodiments of this application provide a virtual network policy configuration method and system, and a virtual network element and a network administration system thereof, so as to quickly and effectively configure a policy to deploy a virtual network element.

According to a first aspect of this application, a virtual network element is provided. The virtual network element includes: a receiving module, configured to receive policy configuration information related to administration, operations or maintenance of a network administration system; and a processing module, configured to perform service control according to the policy configuration information received by the receiving module, or transmit the policy configuration information to a corresponding network element to perform further configuration and management, where the policy configuration information specifically includes one of or a combination of the following policies: a security isolation policy, a security type policy, a performance isolation policy, a service or application priority policy, a deployment policy, an information reporting policy, a backup policy, a simulation program activation policy, or a go-online process policy.

With reference to a first possibility of the first aspect, in a second possible implementation manner, the security isolation policy includes: allocating a virtual resource to different sets or to different security isolation zones, and performing access control or security policy setting for the virtual resource in the sets or the different security isolation zones.

With reference to the second possibility of the first aspect, in a third possible implementation manner, when the virtual resource is allocated to the different sets or to the different security isolation zones, the resource is allocated according to one of or a combination of the following rules: according to an identifier of a set or an isolation zone to which a minimum unit of the virtual resource belongs; according to a security level of the virtual resource; or according to a catalog of virtual resources that need to be isolated in the different sets or the different isolation zones, a number corresponding to a designated virtual resource or virtual machine, or a server on which a virtual machine is located; and that the virtual resource is allocated to a security isolation zone includes: the virtual resource is allocated to an isolation zone according to a geographic location at which the virtual resource is distributed, or a type of a user or a user group that accesses the virtual resource, or a type of an application that uses the virtual resource, a type of a service that uses the virtual resource, or a number of a user that uses the service.

With reference to the second possibility of the first aspect, in a fourth possible implementation manner, the performing access control in the different sets or the different security isolation zones includes: the virtual resource in the different sets or the different security isolation zones can be accessed only by using an access role, an access user level, or an access password that is separately configured for the different sets or the different security isolation zones, where the access role configured for the security isolation zones can be one of or a combination of the following virtual network elements: a virtual network function manager VNFM, a network function virtualization orchestrator NFVO, an operation and maintenance O&M, a virtual network function VNF, a resource manager, a resource user, a resource querier, or a visitor; and the access user level includes one of or a combination of the following: a very important person VIP level, a common user level, or an operator level.

With reference to the fourth possibility of the first aspect, in a fifth possible implementation manner, the performing access control includes performing security control on one of or a combination of the following operations: querying, obtaining a permission, releasing, changing a use quantity, full occupying, or compensating; and the security policy setting includes one of or a combination of the following settings: setting whether virtual resources can access each other, or can be shared with each other, or can compensate each other between the different sets or the different security zones.

With reference to the first possibility of the first aspect, in a sixth possible implementation manner, the performance isolation policy includes setting an upper limit of a physical resource, a virtual resource, or a resource that is used by a virtual network element, and an upper limit of a computing capability provided for a network function virtual infrastructure NFVI or a VNF; the service or application priority policy includes setting a priority of a network service application APP to ensure resource use of a high-priority APP; the deployment policy includes policies of loading, scaling, virtual resource allocation, a virtual network virtualization operation for VNF migration, service go-online parameter configuration, and VM virtual resource calculation parameter input, where the virtual network virtualization operation includes network element minimum requirement and accommodation configuration, network element service go-online parameter input, a migration threshold, a load balancing trigger threshold, an upper limit of a quantity of virtual machines allocatable to a domain, a security group, or a site, a VM upper limit of VM scheduling across sites, across network function virtualization orchestrators NFVOs, or across domains, and the VM virtual resource calculation parameter input policy includes quantity mapping between a virtual network element VNF and a VM, VNF processing capability setting, an upper limit of a connection quantity, connection bandwidth, VNF running environment setting, a VM performance requirement, a CPU quantity, a quantity of CPU cores, a CPU processing capability, a storage requirement, and a quantity calculation relationship between a service and a resource; the information reporting policy includes a trigger condition and a filter criterion for reporting VM status information, fault information, physical device status information, or a virtualization operation to a network administration system, specifying signaling status information reporting, specifying an event or a notification that needs to be reported, specifying a quantity of information to be reported, specifying an information reporting trigger threshold, and specifying an information abnormity threshold; the backup policy includes performing 1:n hot backup, periodically performing 1:n static data backup, and ensuring business continuity and supporting service migration backup, where n is a natural number 1, 2, 3, ...; the simulation program activation policy includes setting a simulation program type or program identifier ID configuration corresponding to redundancy, performance optimization, network scaling, or energy saving, setting a target that a simulation program needs to simulate and test, and setting a start location, a start time period, or a start condition/threshold of a simulation program; and the go-online process policy includes performing, by a VNF manager VNFM, installation of VNF initial general service software and performing, by an element management system EMS, VNF software downloading and installation, go-online parameter configuration, access network service connection configuration, service go-online testing, and service activation, or performing, by the VNFM, VNF virtualization and performing, by an EMS, VNF go-online parameter configuration, access network service connection configuration, service go-online testing, or service activation, or performing, by the VNFM, VNF virtualization, go-online parameter configuration, access network service connection configuration, service go-online testing, and service activation.

With reference to any one of the first to the sixth possibilities of the first aspect, in a seventh possible implementation manner, the receiving module specifically receives one of or a combination of the policy configuration information by using one of or a combination of an Os-Nfvo interface, a VeNf-Vnfm interface, a VnEm-Vnfm interface, a VnEm-Nf interface, an Os-Nf interface, an Nfvo-Vnfm interface, a Vnfm-Vi interface, or an Nfvo-Vi interface, where the Os-Nfvo interface is located between a network management system NMS and the network function virtualization orchestrator NFVO, the VeNf-Vnfm interface is located between the virtual network function VNF and the VNF manager VNFM, the VnEm-Vnfm interface is located between the element management system EMS and the VNFM, the VnEm-Nf interface is located between the EMS and a virtualized infrastructure manager VIM, the Os-Nf interface is located between the NMS and the VIM, the Nfvo-Vnfm interface is located between the NFVO and the VNFM, the Vnfm-Vi interface is located between the VNFM and the VIM, and the Nfvo-Vi interface is located between the NFVO and the VIM.

With reference to the seventh possibility of the first aspect, in an eighth possible implementation manner, the virtual network element includes the NFVO, the VNFM, and the VIM; and a receiving module of the NFVO is specifically configured to: receive, by using the Os-Nfvo interface, the policy configuration information to perform related configuration, and forward some or all of the policy configuration information to the VNFM and the VIM, where the NFVO configures the security isolation policy, the security type policy, the performance isolation policy, and the service or application priority policy by using a VNF catalog VNF-Catalog, a network service catalog NS-Catalog, and an instance catalog Instance-catalog; the VNFM receives the policy configuration information forwarded by the NFVO, and configures the deployment policy, the information reporting policy, the backup policy, the simulation program activation policy, and the go-online process policy of the VNF; and the VIM receives the policy configuration information forwarded by the NFVO, and configures the security isolation policy, the security type policy, the information reporting policy, and the backup policy.

With reference to the seventh possibility of the first aspect, in a ninth possible implementation manner, the virtual network element includes the NFVO, the VNFM, and the VIM; a receiving module of the NFVO is specifically configured to receive, by using the Os-Nfvo interface, the security isolation policy, the security type policy, the performance isolation policy, the service or application priority policy, the deployment policy, the information reporting policy, the backup policy, the simulation program activation policy, and the go-online process policy that are of the NMS and that are cross-site, cross-domain and/or cross-public land mobile network PLMN; a receiving module of the VNFM is specifically configured to receive, by using the VnEm-Vnfm interface, the security isolation policy, the security type policy, the service or application priority policy, the deployment policy, the information reporting policy, the simulation program activation policy, and the go-online process policy that are of the EMS; a receiving module of the VIM is specifically configured to receive, by using the VnEm-Nf interface, the security isolation policy, the security type policy, the performance isolation policy, the service or application priority policy, the deployment policy, the information reporting policy, the backup policy, the simulation program activation policy, and the go-online process policy that are of the EMS; and the receiving module of the VIM is specifically configured to receive, by using the Os-Nf interface, the security isolation policy, the security type policy, the performance isolation policy, the information reporting policy, the backup policy, the simulation program activation policy, and the VM virtual resource calculation parameter input policy that are of the NMS.

According to a second aspect of this application, a virtual network policy configuration method is provided. The configuration method includes: receiving, by a virtual network element, policy configuration information related to administration, operations or maintenance of a network administration system; and performing, by the virtual network element, service control according to the policy configuration information, or transmitting the policy configuration information to a corresponding network element to perform further configuration and management, where the policy configuration information specifically includes one of or a combination of the following policies: a security isolation policy, a security type policy, a performance isolation policy, a service or application priority policy, a deployment policy, an information reporting policy, a backup policy, a simulation program activation policy, or a go-online process policy.

With reference to the first possibility of the second aspect, in a second possible implementation manner, the security isolation policy includes allocating a virtual resource to different sets or to different security isolation zones, and performing access control or security policy setting for the virtual resource in the sets or the isolation zones.

With reference to the second possibility of the second aspect, in a third possible implementation manner, when the virtual resource is allocated to the different sets or to the different security isolation zones, the resource is allocated according to one of or a combination of the following methods: setting an identifier of a set or an isolation zone to which a minimum unit of the virtual resource belongs; setting a security level; or setting, in the sets or the isolation zones, a catalog of virtual resources that need to be isolated, and specifying a number corresponding to a specific virtual resource or virtual machine, or a server on which the virtual resource or virtual machine is located; and that the virtual resource is allocated to a security isolation zone includes: the virtual resource is allocated to an isolation zone according to a geographic location at which the virtual resource is distributed, or a type of a user or a user group that accesses the virtual resource, or a type of an application or a service that uses the virtual resource, and/or a number of a user that uses the service.

With reference to the second possibility of the second aspect, in a fourth possible implementation manner, in a process of performing access control on a set or a security isolation zone: a virtual resource in the set or the security isolation zone can be accessed only by using an access role, an access user level, or an access password that is configured for the set or the security isolation zone, where the access role configured for the security isolation zone can be one of or a combination of the following virtual network elements: a virtual network function manager VNFM, a network function virtualization orchestrator NFVO, an operation and maintenance O&M, a virtual network function VNF, a resource manager, a resource user, a resource querier, or a visitor; and the access user level includes one of or a combination of the following: a very important person VIP level, a common user level, or an operator level.

With reference to the fourth possibility of the second aspect, in a fifth possible implementation manner, the performing access control includes performing security control on one of or a combination of the following operations: querying, obtaining a permission, releasing, changing a use quantity, full occupying, or compensating; and the security policy setting includes one of or a combination of the following settings: setting whether virtual resources can access each other, or can be shared with each other, or can compensate each other between sets or security zones.

With reference to the first possibility of the second aspect, in a sixth possible implementation manner, the performance isolation policy includes setting an upper limit of a physical resource, a virtual resource, or a resource that is used by a virtual network element, and an upper limit of a computing capability provided for a network function virtual infrastructure NFVI or a VNF; the service or application priority policy includes setting a priority of a network service application APP to ensure resource use of a high-priority APP; the deployment policy includes policies of loading, scaling, virtual resource allocation, a virtual network virtualization operation for VNF migration, service go-online parameter configuration, and VM virtual resource calculation parameter input, where the virtual network virtualization operation includes network element minimum requirement and accommodation configuration, network element service go-online parameter input, a migration threshold, a load balancing trigger threshold, an upper limit of a quantity of virtual machines allocatable to a domain, a security group, or a site, a VM upper limit of VM scheduling across sites, across network function virtualization orchestrators NFVOs, or across domains, and the VM virtual resource calculation parameter input policy includes quantity mapping between a virtual network element VNF and a VM, VNF processing capability setting, an upper limit of a connection quantity, connection bandwidth, VNF running environment setting, a VM performance requirement, a CPU quantity, a quantity of CPU cores, a CPU processing capability, a storage requirement, and a quantity calculation relationship between a service and a resource; the information reporting policy includes a trigger condition and a filter criterion for reporting VM status information, fault information, physical device status information, or a virtualization operation to a network administration system, specifying signaling status information reporting, specifying an event or a notification that needs to be reported, specifying a quantity of information to be reported, specifying an information reporting trigger threshold, and specifying an information abnormity threshold; the backup policy includes performing 1:n hot backup, periodically performing 1:n static data backup, and ensuring business continuity and supporting service migration backup, where n is a natural number 1, 2, 3, ...; the simulation program activation policy includes setting a simulation program type or program identifier ID configuration corresponding to redundancy, performance optimization, network scaling, or energy saving, setting a target that a simulation program needs to simulate and test, and setting a start location, a start time period, or a start condition/threshold of a simulation program; and the go-online process policy includes performing, by a VNF manager VNFM, installation of VNF initial general service software and performing, by an element management system EMS, VNF software downloading and installation, go-online parameter configuration, access network service connection configuration, service go-online testing, and service activation, or performing, by the VNFM, VNF virtualization and performing, by an EMS, VNF go-online parameter configuration, access network service connection configuration, service go-online testing, or service activation, or performing, by the VNFM, VNF virtualization, go-online parameter configuration, access network service connection configuration, service go-online testing, and service activation.

With reference to any one of the first to the sixth possibilities of the second aspect, in a seventh possible implementation manner, the receiving, by a virtual network element, policy configuration information includes: receiving, by the virtual network element, one of or a combination of the policy configuration information by using one of or a combination of an Os-Nfvo interface, a VeNf-Vnfm interface, a VnEm-Vnfm interface, a VnEm-Nf interface, an Os-Nf interface, an Nfvo-Vnfm interface, a Vnfm-Vi interface, or an Nfvo-Vi interface, where the Os-Nfvo interface is located between a network management system NMS and the network function virtualization orchestrator NFVO, the VeNf-Vnfm interface is located between the virtual network function VNF and the VNF manager VNFM, the VnEm-Vnfm interface is located between the element management system EMS and the VNFM, the VnEm-Nf interface is located between the EMS and a virtualized infrastructure manager VIM, the Os-Nf interface is located between the NMS and the VIM, the Nfvo-Vnfm interface is located between the NFVO and the VNFM, the Vnfm-Vi interface is located between the VNFM and the VIM, and the Nfvo-Vi interface is located between the NFVO and the VIM.

With reference to the seventh possibility of the second aspect, in an eighth possible implementation manner, the virtual network element includes the NFVO, the VNFM, and the VIM; and the step of receiving, by the virtual network element, the policy configuration information specifically includes: receiving, by the NFVO by using the Os-Nfvo interface, the policy configuration information to perform related configuration, and forwarding some or all of the policy configuration information to the VNFM and the VIM, where the NFVO configures the security isolation policy, the security type policy, the performance isolation policy, and the service or application priority policy by using a VNF catalog VNF-Catalog, a network service catalog NS-Catalog, and an instance catalog Instance-catalog; the VNFM receives the policy configuration information forwarded by the NFVO, and configures the deployment policy, the information reporting policy, the backup policy, the simulation program activation policy, and the go-online process policy of the VNF; and the VIM receives the policy configuration information forwarded by the NFVO, and configures the security isolation policy, the security type policy, the information reporting policy, and the backup policy.

With reference to the seventh possibility of the second aspect, in a ninth possible implementation manner, the virtual network element includes the NFVO, the VNFM, and the VIM; and the step of receiving, by the virtual network element, the policy configuration information specifically includes: receiving, by the NFVO by using the Os-Nfvo interface, the security isolation policy, the security type policy, the performance isolation policy, the service or application priority policy, the deployment policy, the information reporting policy, the backup policy, the simulation program activation policy, and the go-online process policy that are of the NMS and that are cross-site, cross-domain and/or cross-public land mobile network PLMN; receiving, by the VNFM by using the VnEm-Vnfm interface, the security isolation policy, the security type policy, the service or application priority policy, the deployment policy, the information reporting policy, the simulation program activation policy, and the go-online process policy that are of the EMS; receiving, by the VIM by using the VnEm-Nf interface, the security isolation policy, the security type policy, the performance isolation policy, the service or application priority policy, the deployment policy, the information reporting policy, the backup policy, the simulation program activation policy, and the go-online process policy that are of the EMS; and receiving, by the VIM by using the Os-Nf interface, the security isolation policy, the security type policy, the performance isolation policy, the information reporting policy, the backup policy, the simulation program activation policy, and the VM virtual resource calculation parameter input policy that are of the NMS.

According to a third aspect of this application, a network administration system is provided. The network administration system includes: an obtaining module, configured to obtain policy configuration information related to administration, operations or maintenance; a sending module, configured to send, to a virtual network element, the policy configuration information obtained by the obtaining module, so that the virtual network element performs service control according to the policy configuration information, where the policy configuration information specifically includes one of or a combination of the following policies: a security isolation policy, a security type policy, a performance isolation policy, a service or application priority policy, a deployment policy, an information reporting policy, a backup policy, a simulation program activation policy, or a go-online process policy.

With reference to the first possibility of the third aspect, in a second possible implementation manner, the security isolation policy includes: allocating a virtual resource to different sets or to different security isolation zones, and performing access control or security policy setting for the virtual resource in the sets or the isolation zones.

With reference to the second possibility of the third aspect, in a third possible implementation manner, when the virtual resource is allocated to the different sets or to the different security isolation zones, the resource is allocated according to one of or a combination of the following methods: setting an identifier of a set or an isolation zone to which a minimum unit of the virtual resource belongs; setting a security level; or setting, in the sets or the isolation zones, a catalog of virtual resources that need to be isolated, and specifying a number corresponding to a specific virtual resource or virtual machine, or a server on which the virtual resource or virtual machine is located; and that the virtual resource is allocated to a security isolation zone includes: the virtual resource is allocated to an isolation zone according to a geographic location at which the virtual resource is distributed, or a type of a user or a user group that accesses the virtual resource, or a type of an application or a service that uses the virtual resource, and/or a number of a user that uses the service.

With reference to the second possibility of the third aspect, in a fourth possible implementation manner, in a process of performing access control on a set or a security isolation zone: a virtual resource in the set or the security isolation zone can be accessed only by using an access role, an access user level, or an access password that is configured for the set or the security isolation zone, where the access role configured for the security isolation zone can be one of or a combination of the following virtual network elements: a virtual network function manager VNFM, a network function virtualization orchestrator NFVO, an operation and maintenance O&M, a virtual network function VNF, a resource manager, a resource user, a resource querier, or a visitor; and the access user level includes one of or a combination of the following: a very important person VIP level, a common user level, or an operator level.

With reference to the fourth possibility of the third aspect, in a fifth possible implementation manner, the performing access control includes performing security control on one of or a combination of the following operations: querying, obtaining a permission, releasing, changing a use quantity, full occupying, or compensating; and the security policy setting includes one of or a combination of the following settings: setting whether virtual resources can access each other, or can be shared with each other, or can compensate each other between sets or security zones.

With reference to the first possibility of the third aspect, in a sixth possible implementation manner, the performance isolation policy includes setting an upper limit of a physical resource, a virtual resource, or a resource that is used by a virtual network element, and an upper limit of a computing capability provided for a network function virtual infrastructure NFVI or a VNF; the service or application priority policy includes setting a priority of a network service application APP to ensure resource use of a high-priority APP; the deployment policy includes policies of loading, scaling, virtual resource allocation, a virtual network virtualization operation for VNF migration, service go-online parameter configuration, and VM virtual resource calculation parameter input, where the virtual network virtualization operation includes network element minimum requirement and accommodation configuration, network element service go-online parameter input, a migration threshold, a load balancing trigger threshold, an upper limit of a quantity of virtual machines allocatable to a domain, a security group, or a site, a VM upper limit of VM scheduling across sites, across network function virtualization orchestrators NFVOs, or across domains, and the VM virtual resource calculation parameter input policy includes quantity mapping between a virtual network element VNF and a VM, VNF processing capability setting, an upper limit of a connection quantity, connection bandwidth, VNF running environment setting, a VM performance requirement, a CPU quantity, a quantity of CPU cores, a CPU processing capability, a storage requirement, and a quantity calculation relationship between a service and a resource; the information reporting policy includes a trigger condition and a filter criterion for reporting VM status information, fault information, physical device status information, or a virtualization operation to a network administration system, specifying signaling status information reporting, specifying an event or a notification that needs to be reported, specifying a quantity of information to be reported, specifying an information reporting trigger threshold, and specifying an information abnormity threshold; the backup policy includes performing 1:n hot backup, periodically performing 1:n static data backup, and ensuring business continuity and supporting service migration backup, where n is a natural number 1, 2, 3, ...; the simulation program activation policy includes setting a simulation program type or program identifier ID configuration corresponding to redundancy, performance optimization, network scaling, or energy saving, setting a target that a simulation program needs to simulate and test, and setting a start location, a start time period, or a start condition/threshold of a simulation program; and the go-online process policy includes performing, by a VNF manager VNFM, installation of VNF initial general service software and performing, by an element management system EMS, VNF software downloading and installation, go-online parameter configuration, access network service connection configuration, service go-online testing, and service activation, or performing, by the VNFM, VNF virtualization and performing, by an EMS, VNF go-online parameter configuration, access network service connection configuration, service go-online testing, or service activation, or performing, by the VNFM, VNF virtualization, go-online parameter configuration, access network service connection configuration, service go-online testing, and service activation.

With reference to any one of the first to the sixth possibilities of the third aspect, in a seventh possible implementation manner, the network administration system includes a network management system NMS and the element management system EMS, and the sending module is specifically configured to send one of or a combination of the policy configuration information to the virtual network element by using one of or a combination of an Os-Nfvo interface, a VeNf-Vnfm interface, a VnEm-Vnfm interface, a VnEm-Nf interface, an Os-Nf interface, an Nfvo-Vnfm interface, a Vnfm-Vi interface, or an Nfvo-Vi interface, where the Os-Nfvo interface is located between the NMS and the network function virtualization orchestrator NFVO, the VeNf-Vnfm interface is located between the virtual network function VNF and the VNF manager VNFM, the VnEm-Vnfm interface is located between the EMS and the VNFM, the VnEm-Nf interface is located between the EMS and a virtualized infrastructure manager VIM, the Os-Nf interface is located between the NMS and the VIM, the Nfvo-Vnfm interface is located between the NFVO and the VNFM, the Vnfm-Vi interface is located between the VNFM and the VIM, and the Nfvo-Vi interface is located between the NFVO and the VIM.

With reference to the seventh possibility of the third aspect, in an eighth possible implementation manner, the virtual network element includes the NFVO, the VNFM, and the VIM; and a sending module of the NMS is specifically configured to: by using the Os-Nfvo interface, send the policy configuration information to the NFVO to perform related configuration, where the NFVO forwards some or all of the policy configuration information to the VNFM and the VIM, where the NFVO configures the security isolation policy, the security type policy, the performance isolation policy, and the service or application priority policy by using a VNF catalog VNF-Catalog, a network service catalog NS-Catalog, and an instance catalog Instance-catalog; the VNFM receives the policy configuration information forwarded by the NFVO, and configures the deployment policy, the information reporting policy, the backup policy, the simulation program activation policy, and the go-online process policy of the VNF; and the VIM receives the policy configuration information forwarded by the NFVO, and configures the security isolation policy, the security type policy, the information reporting policy, and the backup policy.

With reference to the seventh possibility of the third aspect, in a ninth possible implementation manner, the virtual network element includes the NFVO, the VNFM, and the VIM; a sending module of the NMS is specifically configured to send, to the NFVO by using the Os-Nfvo interface, the security isolation policy, the security type policy, the performance isolation policy, the service or application priority policy, the deployment policy, the information reporting policy, the backup policy, the simulation program activation policy, and the go-online process policy that are cross-site, cross-domain and/or cross-public land mobile network PLMN; a sending module of the EMS is specifically configured to send, to the VNFM by using the VnEm-Vnfm interface, the security isolation policy, the security type policy, the service or application priority policy, the deployment policy, the information reporting policy, the simulation program activation policy, and the go-online process policy; the sending module of the EMS is specifically configured to send, to the VIM by using the VnEm-Nf interface, the security isolation policy, the security type policy, the performance isolation policy, the service or application priority policy, the deployment policy, the information reporting policy, the backup policy, the simulation program activation policy, and the go-online process policy; and the sending module of the NMS is specifically configured to send, to the VIM by using the Os-Nf interface, the security isolation policy, the security type policy, the performance isolation policy, the information reporting policy, the backup policy, the simulation program activation policy, and the VM virtual resource calculation parameter input policy.

According to a fourth aspect of this application, a virtual network policy configuration method is provided. The configuration method includes: obtaining, by a network administration system, policy configuration information related to administration, operations or maintenance; and sending, by the network administration system to a virtual network element, the policy configuration information, so that the virtual network element performs service control according to the policy configuration information, or transmitting the policy configuration information to a corresponding network element to perform further configuration and management.

With reference to the fourth aspect, in a first possible implementation manner, the policy configuration information specifically includes one of or a combination of the following policies: a security isolation policy, a security type policy, a performance isolation policy, a service or application priority policy, a deployment policy, an information reporting policy, a backup policy, a simulation program activation policy, or a go-online process policy.

With reference to the first possibility of the fourth aspect, in a second possible implementation manner, the security isolation policy includes allocating a virtual resource to different sets or to different security isolation zones, and performing access control or security policy setting for the virtual resource in the sets or the isolation zones.

With reference to the second possibility of the fourth aspect, in a third possible implementation manner, when the virtual resource is allocated to the different sets or to the different security isolation zones, the resource is allocated according to one of or a combination of the following methods: setting an identifier of a set or an isolation zone to which a minimum unit of the virtual resource belongs; setting a security level; or setting, in the sets or the isolation zones, a catalog of virtual resources that need to be isolated, and specifying a number corresponding to a specific virtual resource or virtual machine, or a server on which the virtual resource or virtual machine is located; and that the virtual resource is allocated to a security isolation zone includes: the virtual resource is allocated to an isolation zone according to a geographic location at which the virtual resource is distributed, or a type of a user or a user group that accesses the virtual resource, or a type of an application or a service that uses the virtual resource, and/or a number of a user that uses the service.

With reference to the second possibility of the fourth aspect, in a fourth possible implementation manner, in a process of performing access control on a set or a security isolation zone: a virtual resource in the set or the security isolation zone can be accessed only by using an access role, an access user level, or an access password that is configured for the set or the security isolation zone, where the access role configured for the security isolation zone can be one of or a combination of the following virtual network elements: a virtual network function manager VNFM, a network function virtualization orchestrator NFVO, an operation and maintenance O&M, a virtual network function VNF, a resource manager, a resource user, a resource querier, or a visitor; and the access user level includes one of or a combination of the following: a very important person VIP level, a common user level, or an operator level.

With reference to the fourth possibility of the fourth aspect, in a fifth possible implementation manner, the performing access control includes performing security control on one of or a combination of the following operations: querying, obtaining a permission, releasing, changing a use quantity, full occupying, or compensating; and the security policy setting includes one of or a combination of the following settings: setting whether virtual resources can access each other, or can be shared with each other, or can compensate each other between sets or security zones.

With reference to the first possibility of the fourth aspect, in a sixth possible implementation manner, the performance isolation policy includes setting an upper limit of a physical resource, a virtual resource, or a resource that is used by a virtual network element, and an upper limit of a computing capability provided for a network function virtual infrastructure NFVI or a VNF; the service or application priority policy includes setting a priority of a network service application APP to ensure resource use of a high-priority APP; the deployment policy includes policies of loading, scaling, virtual resource allocation, a virtual network virtualization operation for VNF migration, service go-online parameter configuration, and VM virtual resource calculation parameter input, where the virtual network virtualization operation includes network element minimum requirement and accommodation configuration, network element service go-online parameter input, a migration threshold, a load balancing trigger threshold, an upper limit of a quantity of virtual machines allocatable to a domain, a security group, or a site, a VM upper limit of VM scheduling across sites, across network function virtualization orchestrators NFVOs, or across domains, and the VM virtual resource calculation parameter input policy includes quantity mapping between a virtual network element VNF and a VM, VNF processing capability setting, an upper limit of a connection quantity, connection bandwidth, VNF running environment setting, a VM performance requirement, a CPU quantity, a quantity of CPU cores, a CPU processing capability, a storage requirement, and a quantity calculation relationship between a service and a resource; the information reporting policy includes a trigger condition and a filter criterion for reporting VM status information, fault information, physical device status information, or a virtualization operation to a network administration system, specifying signaling status information reporting, specifying an event or a notification that needs to be reported, specifying a quantity of information to be reported, specifying an information reporting trigger threshold, and specifying an information abnormity threshold; the backup policy includes performing 1:n hot backup, periodically performing 1:n static data backup, and ensuring business continuity and supporting service migration backup, where n is a natural number 1, 2, 3, ...; the simulation program activation policy includes setting a simulation program type or program identifier ID configuration corresponding to redundancy, performance optimization, network scaling, or energy saving, setting a target that a simulation program needs to simulate and test, and setting a start location, a start time period, or a start condition/threshold of a simulation program; and the go-online process policy includes performing, by a VNF manager VNFM, installation of VNF initial general service software and performing, by an element management system EMS, VNF software downloading and installation, go-online parameter configuration, access network service connection configuration, service go-online testing, and service activation, or performing, by the VNFM, VNF virtualization and performing, by an EMS, VNF go-online parameter configuration, access network service connection configuration, service go-online testing, or service activation, or performing, by the VNFM, VNF virtualization, go-online parameter configuration, access network service connection configuration, service go-online testing, and service activation.

With reference to any one of the first to the sixth possibilities of the fourth aspect, in a seventh possible implementation manner, the sending, by the network administration system to a virtual network element, the policy configuration information includes: sending, by the network administration system to the virtual network element, one of or a combination of the policy configuration information by using one of or a combination of an Os-Nfvo interface, a VeNf-Vnfm interface, a VnEm-Vnfm interface, a VnEm-Nf interface, an Os-Nf interface, an Nfvo-Vnfm interface, a Vnfm-Vi interface, or an Nfvo-Vi interface, where the network administration system includes a network management system NMS and the element management system EMS, the Os-Nfvo interface is located between the NMS and the network function virtualization orchestrator NFVO, the VeNf-Vnfm interface is located between the virtual network function VNF and the VNF manager VNFM, the VnEm-Vnfm interface is located between the EMS and the VNFM, the VnEm-Nf interface is located between the EMS and a virtualized infrastructure manager VIM, the Os-Nf interface is located between the NMS and the VIM, the Nfvo-Vnfm interface is located between the NFVO and the VNFM, the Vnfm-Vi interface is located between the VNFM and the VIM, and the Nfvo-Vi interface is located between the NFVO and the VIM.

With reference to the seventh possibility of the fourth aspect, in an eighth possible implementation manner, the virtual network element includes the NFVO, the VNFM, and the VIM; and the step of sending, by the network administration system to a virtual network element, the policy configuration information specifically includes: sending, by the NMS by using the Os-Nfvo interface, the policy configuration information to the NFVO to perform related configuration, where the NFVO forwards some or all of the policy configuration information to the VNFM and the VIM, where the NFVO configures the security isolation policy, the security type policy, the performance isolation policy, and the service or application priority policy by using a VNF catalog VNF-Catalog, a network service catalog NS-Catalog, and an instance catalog Instance-catalog; the VNFM receives the policy configuration information forwarded by the NFVO, and configures the deployment policy, the information reporting policy, the backup policy, the simulation program activation policy, and the go-online process policy of the VNF; and the VIM receives the policy configuration information forwarded by the NFVO, and configures the security isolation policy, the security type policy, the information reporting policy, and the backup policy.

With reference to the seventh possibility of the fourth aspect, in a ninth possible implementation manner, the virtual network element includes the NFVO, the VNFM, and the VIM; and the step of sending, by the network administration system to a virtual network element, the policy configuration information specifically includes: sending, by the NMS, to the NFVO by using the Os-Nfvo interface, the security isolation policy, the security type policy, the performance isolation policy, the service or application priority policy, the deployment policy, the information reporting policy, the backup policy, the simulation program activation policy, and the go-online process policy that are cross-site, cross-domain and/or cross-public land mobile network PLMN; sending, by the EMS, to the VNFM by using the VnEm-Vnfm interface, the security isolation policy, the security type policy, the service or application priority policy, the deployment policy, the information reporting policy, the simulation program activation policy, and the go-online process policy; sending, by the EMS, to the VIM by using the VnEm-Nf interface, the security isolation policy, the security type policy, the performance isolation policy, the service or application priority policy, the deployment policy, the information reporting policy, the backup policy, the simulation program activation policy, and the go-online process policy; and sending, by the NMS, to the VIM by using the Os-Nf interface, the security isolation policy, the security type policy, the performance isolation policy, the information reporting policy, the backup policy, the simulation program activation policy, and the VM virtual resource calculation parameter input policy.

According to a fifth aspect of this application, a virtual network policy configuration system is provided. The configuration system includes the virtual network element according to the first aspect or any possibility of the first aspect and the network administration system according to the third aspect or any possibility of the third aspect, the virtual network element receives policy configuration information that is related to administration, operations or maintenance and that is sent by the network administration system, so as to perform service control according to the policy configuration information, or transmits the policy configuration information to a corresponding network element to perform further configuration and management.

In this application, in an NFV deployment process, different virtual network elements can receive specific policy configuration information and perform separate configuration, so as to resolve a technical problem that in the prior art, when virtualized deployment is performed, a system needs to perform unified and coordinated processing on all virtual network elements, resulting in low efficiency and slow deployment. Specifically, in this application, configuration is performed for different virtual network elements in a targeted manner, so that a system resource is allocated and used more properly, and additionally a specific configuration catalog is refined by using policy configuration information, so that NFV deployment can be performed quickly and effectively, thereby increasing virtualization efficiency to a great extent, so as to quickly respond to and process a related service.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a modular block diagram of an implementation manner of a virtual network policy configuration system;
FIG. 2 is a schematic structural diagram of a first example of the virtual network policy configuration system shown in FIG. 1;
FIG. 3 is a schematic structural diagram of a second example of the virtual network policy configuration system shown in FIG. 1;
FIG. 4 is a schematic flowchart of an implementation manner of a virtual network policy configuration method; and
FIG. 5 is a schematic flowchart of another implementation manner of a virtual network policy configuration method.

### DESCRIPTION OF EMBODIMENTS

In the following description, to illustrate rather than limit, specific details such as a particular system structure, an interface, and a technology are provided to make a thorough understanding of this application. However, a person skilled in the art should know that this application may be practiced in other embodiments without these specific details. In other cases, detailed descriptions of well-known apparatuses, circuits, and methods are omitted, so that this application is described without being obscured by unnecessary details.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

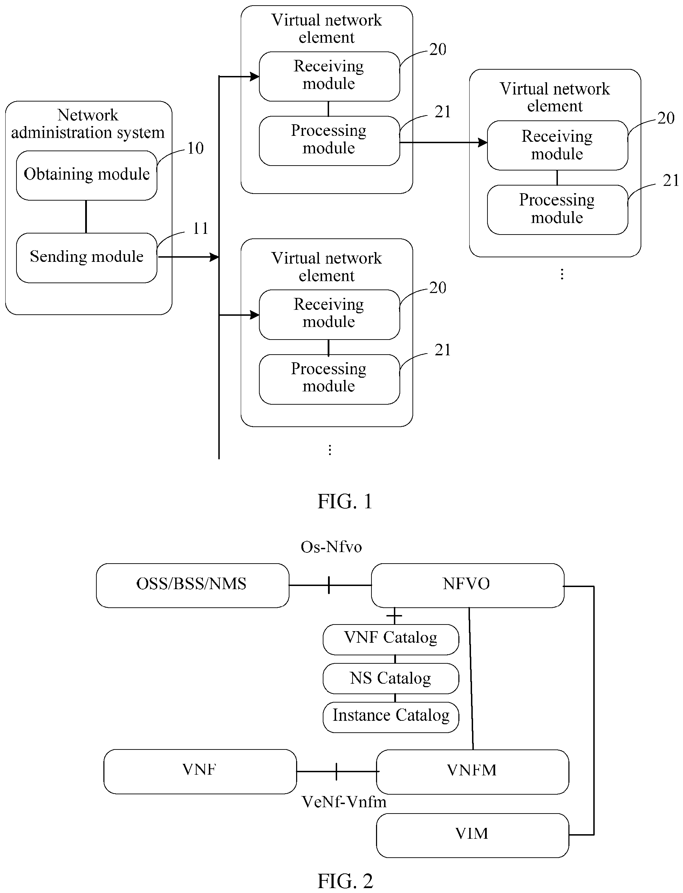

Referring to FIG. 1, FIG. 1 is a modular block diagram of an implementation manner of a virtual network policy configuration system. In this implementation manner, the configuration system is a network administration system.

In this embodiment, the configuration system may include an obtaining module 10 and a sending module 11. The obtaining module 10 is configured to obtain policy configuration information related to administration, operations or maintenance; and the sending module 11 is configured to send, to a virtual network element, the policy configuration information obtained by the obtaining module 10, so that the virtual network element performs service control according to the policy configuration information, or transmits the policy configuration information to a corresponding network element to perform further configuration and management.

It is worth mentioning that, in this implementation manner, the network administration system may accept a need, an operation requirement, and the like that are from an external service optimization and analysis module; and the network administration system needs to optimize an NFV-based telecommunication service, and particularly associate an upper level and a lower level, optimize services, or coordinate a related control policy, or the like. In addition, the network administration system needs to perform optimization and perform configuration in aspects such as network resource use, network coverage, and mobility. To achieve a technical effect of optimization, in this implementation manner, the obtaining module 10 is specifically configured to obtain one of or a combination of a security isolation policy, a security type policy, a performance isolation policy, a service or application priority policy, a deployment policy, an information reporting policy, a backup policy, a simulation program activation policy, or a go-online process policy.

Specifically, the security isolation policy involved in this implementation manner may include allocating a virtual resource to different sets or to different security isolation zones, and performing access control or security policy setting for the virtual resource in the sets or the isolation zones. When the virtual resource is allocated to the different sets or to the different security isolation zones, the resource is allocated according to one of or a combination of the following methods: setting an identifier of a set or an isolation zone to which a minimum unit of the virtual resource belongs; setting a security level; or setting, in the sets or the isolation zones, a catalog of virtual resources that need to be isolated, and specifying a number corresponding to a specific virtual resource or virtual machine, or a server on which the virtual resource or virtual machine is located; and in addition, that the virtual resource is allocated to a security isolation zone includes: the virtual resource is allocated to an isolation zone according to a geographic location at which the virtual resource is distributed, or a type of a user or a user group that accesses the virtual resource, or a type of an application or a service that uses the virtual resource, and/or a number of a user that uses the service.

In a process of performing access control on a set or a security isolation zone: a virtual resource in the set or the security isolation zone can be accessed only by using an access role, an access user level, or an access password that is configured for the set or the security isolation zone. It is not difficult to understand that, a virtual resource may need to be isolated to an extent due to a geographic location, a VIP requirement, service planning, or the like. Therefore, responding can be effectively preformed by using the security isolation policy in this implementation manner. In this implementation manner, the access role configured for the security isolation zones can be one of or a combination of the following virtual network elements: an NFVO, a VNFM (VNF Manager, VNF manager), an O&M (Operation and Maintenance, operation and maintenance), or a VNF, a resource manager, a resource user, a resource querier, a visitor, or the like; and the access user level includes one of or a combination of the following: a VIP (very important person, very important person) level, a common user level, an operator level, or the like. Resources in an isolation zone have a same isolation identifier or isolation group identifier. In addition, a virtual resource catalog may list a VM-ID (Virtual Machine-Identity, virtual machine-identity), an NFVI-ID (Network Function Virtual Infrastructure-Identity, network function virtual infrastructure-identity), a VIM-ID (Virtualised Infrastructure Manager-Identity, virtualized infrastructure manager-identity), and the like. In addition, in this implementation manner, the performing access control includes performing security control on one of or a combination of the following operations: querying, obtaining a permission, releasing, changing a use quantity, full occupying, or compensating; and the security policy setting includes one of or a combination of the following settings: setting whether virtual resources can access each other, or can be shared with each other, or can compensate each other between sets or security zones.

In this implementation manner, the security type policy includes allocating a VNF security group and a VNF priority group, configuring a corresponding security level and a corresponding priority, and configuring corresponding security levels, priorities and/or security passwords for different virtual resource access entities or virtual resource access operations of different virtual resource access entities. For example, in this implementation manner, clusters of different security levels or priorities may be set, and corresponding security levels or priorities may be configured; or virtual network resources may be set to manage multiple identities, where different identities have designated security levels, priorities, or passwords, so as to implement rights control on resource access operations of the identities; or a related VNF network element (that is, a VNF-ID set), VNFM-ID set, and VIM entity (a VM-ID set) that belong to the foregoing security group or priority group may be set; or a virtual resource access rights level, a security level of the VNFM or the NFVO, an access security password, or a security group level when the VNFM or the NFVO virtualizes the VNF may be set; or a label is set for a physical resource, the physical resource is allocated to a group, another management device or cloud system is prohibited from accessing a resource in the group, and only a user with a designated right or level is allowed to access the resource, so as to configure a policy of physical resource isolation; or a clock security policy is set, to allow a user with a designated security level to perform modification or reading.

It should be noted that, the security type policy controls use of a virtual resource, a security level or a password of a virtual resource occupying request, and a security level or an access password corresponding to a cluster to which a virtual resource requester (such as the VNFM, the NFVO, or the O&M) belongs, which all need to be compared with a lowest level limit or an access password corresponding to an access operation of virtual resources, to determine whether service requests and operations such as access to or use of these virtual resources are allowed.

In this implementation manner, the performance isolation policy includes setting physical resources (such as various computer servers), and virtual resources (such as the NFVI and the VIM; or computing resources managed by the NFVI based on cloud system software such as OpenStack and VMWare), and setting a VM quantity upper limit, an upper limit of a resource used by a virtual network element and an upper limit of a computing capability provided for the NFVI or the VNF, or an upper limit of a computing capability of each VM.

In this implementation manner, the service or application priority policy includes setting a priority of an APP (APPlication, network service application) to ensure resource use of a high-priority APP. When a resource is limited and a conflict occurs between various APPs for using the resource, an APP with a low priority is stopped or rejected, so as to ensure an APP with a high priority; or if an APP with a high priority needs to be expanded, a resource of an APP with a low priority may be released, so as to ensure that the APP with the high priority obtains a sufficient resource.

In this implementation manner, the deployment policy includes policies of loading, scaling, virtual resource allocation, a virtual network virtualization operation for VNF migration, service go-online parameter configuration, and VM virtual resource calculation parameter input, where the virtual network virtualization operation includes network element minimum requirement and accommodation configuration, network element service go-online parameter input, a migration threshold, a load balancing trigger threshold, an upper limit of a quantity of virtual machines allocatable to a domain, a security group, or a site, a VM upper limit of VM scheduling across sites (that is, sites), across NFVOs, or across domains (that is, domains), and the VM virtual resource calculation parameter input policy includes quantity mapping between a virtual network element VNF and a VM, VNF processing capability setting, an upper limit of a connection quantity, connection bandwidth, VNF running environment setting, a VM performance requirement, a CPU quantity, a quantity of CPU cores, a CPU processing capability, a storage requirement, and a quantity calculation relationship between a service and a resource. Specifically, in this implementation manner, virtual network elements of different vendors need virtual resource minimum requirement configurations, virtual network element capacity configurations, virtual network element service go-online parameter input, configurations of gateway addresses or server addresses that a virtual network element needs to access during running, virtual network element connection bandwidth configurations, configurations of security passwords or authentication information needed for running of a virtual network element, signaling channel bandwidth configurations, QoS (Quality of Service, quality of service) configurations, KQI (Quality Indicators, key quality indicator) configurations, QoE (Quality of Experience, user service experience) configurations, or the like, or settings of quantity mapping between a virtual network element VNF and a VM, a VNF processing capability, an upper limit of a connection quantity, connection bandwidth, VNF running environment setting (for example, definitions such as whether a ratio of a quantity of VNFs to a quantity of connections between the VNFs and other virtual network elements is 1:1 or 1:n, and a value of n), a VM performance requirement, a CPU quantity, a quantity of CPU cores, a CPU processing capability, a storage requirement, and a quantity calculation relationship between a service and a resource, different services, a corresponding reserved virtual resource quantity, or the like.

In this implementation manner, the information reporting policy includes a trigger condition and a filter criterion for reporting VM status information, fault information, physical device status information, or a virtualization operation to a network administration system, specifying signaling status information reporting, specifying an event or a notification that needs to be reported, specifying a quantity of information to be reported, specifying an information reporting trigger threshold, and specifying an information abnormity threshold. The virtualization operation may be Instantiation, On-boarding, or Scaling in/out, or the like, and this is not limited herein.

In this implementation manner, the backup policy includes performing 1:n hot backup, periodically performing 1:n static data backup, and ensuring business continuity and supporting service migration backup, where n is a natural number 1, 2, 3, ...

In this implementation manner, the simulation program activation policy includes setting a simulation program type or program ID configuration corresponding to redundancy, performance optimization, network scaling, or energy saving, setting a target that a simulation program needs to simulate and test, and setting a start location, a start time period, or a start condition/threshold of a simulation program. Specifically, in this implementation manner, disaster simulation, new APP go-online simulation, data server failure simulation, go-online simulation of all services, or the like may be set. Service optimization result simulation, impact on an existing system, performance enhancement or deterioration caused by optimization, a location at which a defect or a deficiency of an existing resource occurs in a disaster, or the like falls within the understanding range of a person skilled in the art, and is not described in detail.

In this implementation manner, the go-online process policy includes: a mode 1 of performing, by a VNFM, installation of VNF initial general service software and performing, by an EMS (Element Management System, element management system), VNF software downloading and installation, go-online parameter configuration, access network service connection configuration, service go-online testing, and service activation; a mode 2 of performing, by the VNFM, VNF virtualization and performing, by an EMS, VNF go-online parameter configuration, access network service connection configuration, service go-online testing, or service activation; and a mode 3 of performing, by the VNFM, VNF virtualization, go-online parameter configuration, access network service connection configuration, service go-online testing, and service activation.

In this implementation manner, the virtual network element may include a receiving module 20 and a processing module 21, where the receiving module 20 is configured to receive policy configuration information related to administration, operations or maintenance of a network administration system; and the processing module 21 is configured to perform service control according to the policy configuration information received by the receiving module 20, or transmit the policy configuration information to a corresponding network element to perform further configuration and management.

Corresponding to a side of the network administration system, the receiving module 20 is specifically configured to receive one of or a combination of a security isolation policy, a security type policy, a performance isolation policy, a service or application priority policy, a deployment policy, an information reporting policy, a backup policy, a simulation program activation policy, or a go-online process policy.

In this application, in an NFV deployment process, different virtual network elements can receive specific policy configuration information and perform separate configuration, so as to resolve a technical problem that in the prior art, when virtualized deployment is performed, a system needs to perform unified and coordinated processing on all virtual network elements, resulting in low efficiency and slow deployment. Specifically, in this application, configuration is performed for different virtual network elements in a targeted manner, so that a system resource is allocated and used more properly, and additionally a specific configuration catalog is refined by using policy configuration information, so that NFV deployment can be performed quickly and effectively, thereby increasing virtualization efficiency to a great extent, so as to quickly respond to and process a related service.

In the foregoing implementation manner, an NFV deployment location, or the like is optimized to a great extent. In this implementation manner, NFV deployment may be further optimized in combination with specifying a node location at which a policy is configured. For details, refer to FIG. 2. FIG. 2 is a schematic structural diagram of a first example of the virtual network policy configuration system shown in FIG. 1.

It should be noted that, as shown in FIG. 2, an interface between the NMS and the NFVO is defined as an Os-Nfvo interface, and an interface between the VNF and the VNFM is defined as a VeNf-Vnfm interface. A network administration system may be the NMS (Network Management System, network management system) and the EMS, and may further be a BSS (Business support system, business support system), an OSS (Operation support system, operation support system), or the like, where a virtual network element may include the NFVO, the VNFM, the VIM, and the like.

In this example, the sending module 11 of the NMS is specifically configured to send, by using the Os-Nfvo interface, the policy configuration information to the NFVO to perform related configuration, where the NFVO forwards some or all of the policy configuration information to the VNFM and the VIM, where the NFVO configures the security isolation policy, the security type policy, the performance isolation policy, and the service or application priority policy by using a VNF-Catalog (VNF catalog), an NS-Catalog (Network Service, network service catalog), and an Instance-catalog (instance catalog); next, the VNFM receives the policy configuration information forwarded by the NFVO, and configures the deployment policy, the information reporting policy, the backup policy, the simulation program activation policy, and the go-online process policy of the VNF; and the VIM receives the policy configuration information forwarded by the NFVO, and configures the security isolation policy, the security type policy, the information reporting policy, and the backup policy.

Correspondingly, on a side of the virtual network element, the receiving module 20 of the NFVO is specifically configured to receive, by using the Os-Nfvo interface, the policy configuration information to perform related configuration, and forward some or all of the policy configuration information to the VNFM and the VIM, where the NFVO configures the security isolation policy, the security type policy, the performance isolation policy, and the service or application priority policy by using the VNF-Catalog, the NS-Catalog, and the Instance-catalog; the VNFM receives the policy configuration information forwarded by the NFVO, and configures the deployment policy, the information reporting policy, the backup policy, the simulation program activation policy, and the go-online process policy of the VNF; and the VIM receives the policy configuration information forwarded by the NFVO, and configures the security isolation policy, the security type policy, the information reporting policy, and the backup policy.

In this example, it is not difficult to see that, a node location at which a policy is configured may be only on the NFVO, and then other policy configuration information is forwarded/transmitted by the NFVO to a related virtual network element as required.

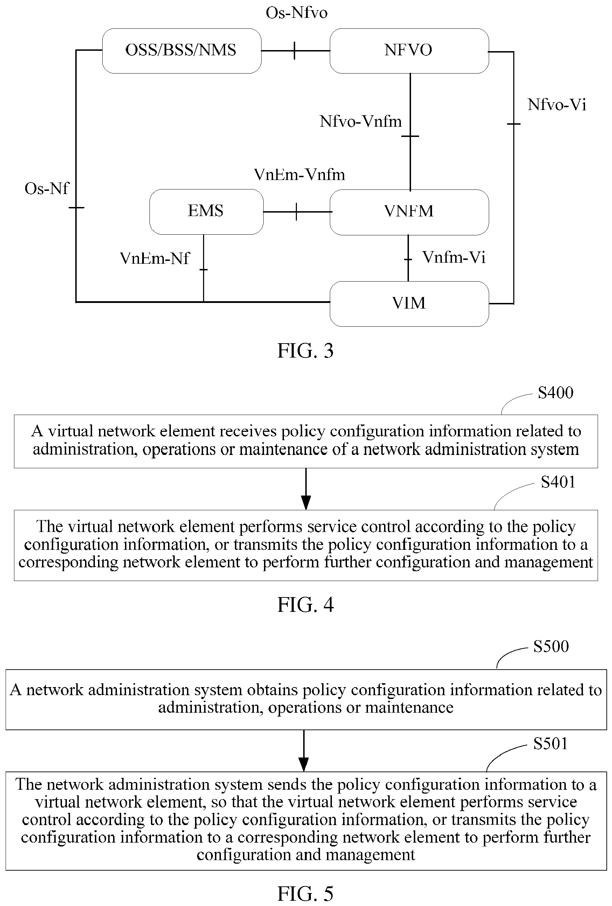

Further, referring to FIG. 3, FIG. 3 is a schematic structural diagram of a second example of the virtual network policy configuration system shown in FIG. 1. In this example, an interface between the EMS and the VNFM is defined as a VnEm-Vnfm interface, an interface between the EMS and the VIM is defined as a VnEm-Nf interface, an interface between the NMS and the VIM is defined as an Os-Nf interface, an interface between the NFVO and the VNFM is defined as an Nfvo-Vnfm interface, an interface between the VNFM and the VIM is defined as a Vnfm-Vi interface, and an interface between the NFVO and the VIM is defined as an Nfvo-Vi interface.

As described above, the network administration system may be the NMS (Network Management System, network management system) and the EMS, and may further be the BSS (Business support system, business support system), the OSS (Operation support system, operation support system), or the like, where the virtual network element may include the NFVO, the VNFM, the VIM, and the like. The virtual network element may include the NFVO, the VNFM, the VIM, and the like.

In this example, as shown in FIG. 3, the sending module 11 of the NMS is specifically configured to send, to the NFVO by using the Os-Nfvo interface, the security isolation policy, the security type policy, the performance isolation policy, the service or application priority policy, the deployment policy, the information reporting policy, the backup policy, the simulation program activation policy, and the go-online process policy that are cross-site (that is, site), cross-domain (that is, domain) and/or cross-PLMN (Public Land Mobile Network, public land mobile network); the sending module 11 of the EMS is specifically configured to send, to the VNFM by using the VnEm-Vnfm interface, the security isolation policy, the security type policy, the service or application priority policy, the deployment policy, the information reporting policy, the simulation program activation policy, and the go-online process policy; the sending module 11 of the EMS is specifically configured to send, to the VIM by using the VnEm-Nf interface, the security isolation policy, the security type policy, the performance isolation policy, the service or application priority policy, the deployment policy, the information reporting policy, the backup policy, the simulation program activation policy, and the go-online process policy; and the sending module 11 of the NMS is specifically configured to send, to the VIM by using the Os-Nf interface, the security isolation policy, the security type policy, the performance isolation policy, the information reporting policy, the backup policy, the simulation program activation policy, and the VM virtual resource calculation parameter input policy.

Accordingly, on a side of the virtual network element, the receiving module 20 of the NFVO is specifically configured to receive, by using the Os-Nfvo interface, the security isolation policy, the security type policy, the performance isolation policy, the service or application priority policy, the deployment policy, the information reporting policy, the backup policy, the simulation program activation policy, and the go-online process policy that are cross-site, cross-domain and/or cross-PLMN and that are of the NMS; the receiving module 20 of the VNFM is specifically configured to receive, by using the VnEm-Vnfm interface, the security isolation policy, the security type policy, the service or application priority policy, the deployment policy, the information reporting policy, the simulation program activation policy, and the go-online process policy that are of the EMS; the receiving module 20 of the VIM is specifically configured to receive, by using the VnEm-Nf interface, the security isolation policy, the security type policy, the performance isolation policy, the service or application priority policy, the deployment policy, the information reporting policy, the backup policy, the simulation program activation policy, and the go-online process policy that are of the EMS; and the receiving module 20 of the VIM is specifically configured to receive, by using the Os-Nf interface, the security isolation policy, the security type policy, the performance isolation policy, the information reporting policy, the backup policy, the simulation program activation policy, and the VM virtual resource calculation parameter input policy that are of the NMS.

It needs to point out that, the foregoing first example and second example may be further used in combination according to an actual situation. Specifically, the sending module 11 may send, to the virtual network element, one of or a combination of the policy configuration information by using one of or a combination of an Os-Nfvo interface, a VeNf-Vnfm interface, a VnEm-Vnfm interface, a VnEm-Nf interface, an Os-Nf interface, an Nfvo-Vnfm interface, a Vnfm-Vi interface, or an Nfvo-Vi interface. On a side of the virtual network element, the receiving module 20 specifically receives one of or a combination of the policy configuration information by using one of or a combination of an Os-Nfvo interface, a VeNf-Vnfm interface, a VnEm-Vnfm interface, a VnEm-Nf interface, an Os-Nf interface, an Nfvo-Vnfm interface, a Vnfm-Vi interface, or an Nfvo-Vi interface.

With reference to the foregoing implementation manners and the examples of the implementation manners, it is not difficult to understand that, in this application, general control of a virtual network policy is implemented, and specific policy configuration information, a configuration node location, a configuration process, policy categories, a function definition of a virtual network element related to network administration systems, a range related to policies, and the like that are of policy control are refined.

In this application, in an NFV deployment process, a virtual network element can receive policy configuration information and perform configuration, so as to resolve a technical problem that in the prior art, when virtualized deployment is performed, a system needs to perform unified and coordinated processing, resulting in low efficiency and slow and unordered deployment. Specifically, in this application, a virtual network element location of policy configuration information is selectively configured in a targeted manner, so that a system resource is allocated and used more properly, and additionally a specific configuration catalog is refined by using policy configuration information, so that NFV deployment can be performed quickly and effectively, thereby increasing virtualization efficiency to a great extent, so as to quickly respond to and process a related service.

In addition, this application further provides a virtual network policy configuration method. Referring to FIG. 4, FIG. 4 is a schematic flowchart of an implementation manner of a virtual network policy configuration method. It should be noted that, in this implementation manner, the virtual network policy configuration method is preferably described in any one of FIG. 1 to FIG. 3 and the implementation manners of FIG. 1 to FIG. 3. In this implementation manner, the virtual network policy configuration method includes but is not limited to the following steps.

S400: A virtual network element receives policy configuration information related to administration, operations or maintenance of a network administration system.

In S400, the virtual network element receives one of or a combination of a security isolation policy, a security type policy, a performance isolation policy, a service or application priority policy, a deployment policy, an information reporting policy, a backup policy, a simulation program activation policy, or a go-online process policy.

As described above, the security isolation policy includes setting virtual resources to be prohibited from accessing each other, compensating each other, and occupying each other, setting an isolation identifier, an isolation group identifier, and an isolation zone, and setting, in the isolation zone, a catalog of virtual resources that need to be isolated.

Specifically, the security isolation policy may include allocating a virtual resource to different sets or to different security isolation zones, and performing access control or security policy setting for the virtual resource in the sets or the isolation zones. When the virtual resource is allocated to the different sets or to the different security isolation zones, the resource is allocated according to one of or a combination of the following methods: setting an identifier of a set or an isolation zone to which a minimum unit of the virtual resource belongs; setting a security level; or setting, in the sets or the isolation zones, a catalog of virtual resources that need to be isolated, and specifying a number corresponding to a specific virtual resource or virtual machine, or a server on which the virtual resource or virtual machine is located; and that the virtual resource is allocated to a security isolation zone includes: the virtual resource is allocated to an isolation zone according to a geographic location at which the virtual resource is distributed, or a type of a user or a user group that accesses the virtual resource, or a type of an application or a service that uses the virtual resource, and/or a number of a user that uses the service.

In this implementation manner, in a process of performing access control on a set or a security isolation zone: a virtual resource in the set or the security isolation zone can be accessed only by using an access role, an access user level, or an access password that is configured for the set or the security isolation zone, where the access role configured for the security isolation zone can be one of or a combination of the following virtual network elements: a VNFM, an NFVO, an O&M, a VNF, a resource manager, a resource user, a resource querier, or a visitor; and the access user level includes one of or a combination of the following: a very important person VIP level, a common user level, or an operator level.

In a specific implementation manner, the performing access control includes performing security control on one of or a combination of the following operations: querying, obtaining a permission, releasing, changing a use quantity, full occupying, or compensating; and the security policy setting includes one of or a combination of the following settings: setting whether virtual resources can access each other, or can be shared with each other, or can compensate each other between sets or security zones.

The security type policy includes allocating a VNF security group and a VNF priority group, configuring a corresponding security level and a corresponding priority, and configuring corresponding security levels, priorities and/or security passwords for different virtual resource access entities or virtual resource access operations of different virtual resource access entities.

The performance isolation policy includes setting an upper limit of a physical resource, a virtual resource, or a resource that is used by a virtual network element, and an upper limit of a computing capability provided for an NFVI or a VNF.

The service or application priority policy includes setting a priority of an APP to ensure resource use of a high-priority APP.

The deployment policy includes policies of loading, scaling, virtual resource allocation, a virtual network virtualization operation for VNF migration, service go-online parameter configuration, and VM virtual resource calculation parameter input, where the virtual network virtualization operation includes network element minimum requirement and accommodation configuration, network element service go-online parameter input, a migration threshold, a load balancing trigger threshold, an upper limit of a quantity of virtual machines allocatable to a domain, a security group, or a site, a VM upper limit of VM scheduling across sites, across NFVOs, or across domains, and the VM virtual resource calculation parameter input policy includes quantity mapping between a VNF and a VM, VNF processing capability setting, an upper limit of a connection quantity, connection bandwidth, VNF running environment setting, a VM performance requirement, a CPU quantity, a quantity of CPU cores, a CPU processing capability, a storage requirement, and a quantity calculation relationship between a service and a resource.

The information reporting policy includes a trigger condition and a filter criterion for reporting VM status information, fault information, physical device status information, or a virtualization operation to a network administration system, specifying signaling status information reporting, specifying an event or a notification that needs to be reported, specifying a quantity of information to be reported, specifying an information reporting trigger threshold, and specifying an information abnormity threshold.

The backup policy includes performing 1:n hot backup, periodically performing 1:n static data backup, and ensuring business continuity and supporting service migration backup, where n is a natural number 1, 2, 3, ...

The simulation program activation policy includes setting a simulation program type or program ID configuration corresponding to redundancy, performance optimization, network scaling, or energy saving, setting a target that a simulation program needs to simulate and test, and setting a start location, a start time period, or a start condition/threshold of a simulation program.

The go-online process policy includes performing, by a VNFM, installation of VNF initial general service software and performing, by an EMS, VNF software downloading and installation, go-online parameter configuration, access network service connection configuration, service go-online testing, and service activation, or performing, by the VNFM, VNF virtualization and performing, by an EMS, VNF go-online parameter configuration, access network service connection configuration, service go-online testing, or service activation, or performing, by the VNFM, VNF virtualization, go-online parameter configuration, access network service connection configuration, service go-online testing, and service activation.

It is noteworthy that, the virtual network element may receive, one of or a combination of the policy configuration information by using one of or a combination of an Os-Nfvo interface, a VeNf-Vnfm interface, a VnEm-Vnfm interface, a VnEm-Nf interface, an Os-Nf interface, an Nfvo-Vnfm interface, a Vnfm-Vi interface, or an Nfvo-Vi interface.

Specifically, in an example thereof, the NFVO receives, by using the Os-Nfvo interface, the policy configuration information to perform related configuration, and forwards some or all of the policy configuration information to the VNFM and the VIM, where the NFVO configures the security isolation policy, the security type policy, the performance isolation policy, and the service or application priority policy by using the VNF-Catalog, the NS-Catalog, and the Instance-catalog; the VNFM receives the policy configuration information forwarded by the NFVO, and configures the deployment policy, the information reporting policy, the backup policy, the simulation program activation policy, and the go-online process policy of the VNF; and the VIM receives the policy configuration information forwarded by the NFVO, and configures the security isolation policy, the security type policy, the information reporting policy, and the backup policy.

In another example, the NFVO receives, by using the Os-Nfvo interface, the security isolation policy, the security type policy, the performance isolation policy, the service or application priority policy, the deployment policy, the information reporting policy, the backup policy, the simulation program activation policy, and the go-online process policy that are cross-site, cross-domain and/or cross-PLMN and that are of the NMS; the VNFM receives, by using the VnEm-Vnfm interface, the security isolation policy, the security type policy, the service or application priority policy, the deployment policy, the information reporting policy, the simulation program activation policy, and the go-online process policy that are of the EMS; the VIM receives, by using the VnEm-Nf interface, the security isolation policy, the security type policy, the performance isolation policy, the service or application priority policy, the deployment policy, the information reporting policy, the backup policy, the simulation program activation policy, and the go-online process policy that are of the EMS; and the VIM receives, by using the Os-Nf interface, the security isolation policy, the security type policy, the performance isolation policy, the information reporting policy, the backup policy, the simulation program activation policy, and the VM virtual resource calculation parameter input policy that are of the NMS.

S401: The virtual network element performs service control according to the policy configuration information, or transmits the policy configuration information to a corresponding network element to perform further configuration and management.

In S401, after performing optimized deployment and configuration by using the policy configuration information received in S400, the virtual network element may perform responding processing on a service request, a virtualization operation, or the like, to perform service control, or transmit the policy configuration information to a corresponding network element to perform further configuration and management.

On a side of a network administration system, referring to FIG. 5, FIG. 5 is a schematic flowchart of another implementation manner of a virtual network policy configuration method. In this implementation manner, a virtual network policy configuration method includes but is not limited to the following steps.

S500: The network administration system obtains policy configuration information related to administration, operations or maintenance.

In S500, the network administration system obtains one of or a combination of a security isolation policy, a security type policy, a performance isolation policy, a service or application priority policy, a deployment policy, an information reporting policy, a backup policy, a simulation program activation policy, or a go-online process policy.

Specifically, the security isolation policy includes allocating a virtual resource to different sets or to different security isolation zones, and performing access control or security policy setting for the virtual resource in the sets or the isolation zones. When the virtual resource is allocated to the different sets or to the different security isolation zones, the resource is allocated according to one of or a combination of the following methods: setting an identifier of a set or an isolation zone to which a minimum unit of the virtual resource belongs; setting a security level; or setting, in the sets or the isolation zones, a catalog of virtual resources that need to be isolated, and specifying a number corresponding to a specific virtual resource or virtual machine, or a server on which the virtual resource or virtual machine is located; and that the virtual resource is allocated to a security isolation zone includes: the virtual resource is allocated to an isolation zone according to a geographic location at which the virtual resource is distributed, or a type of a user or a user group that accesses the virtual resource, or a type of an application or a service that uses the virtual resource, and/or a number of a user that uses the service.

In this implementation manner, in a process of performing access control on a set or a security isolation zone: a virtual resource in the set or the security isolation zone can be accessed only by using an access role, an access user level, or an access password that is configured for the set or the security isolation zone. The access role configured for the security isolation zone can be one of or a combination of the following virtual network elements: a VNFM, an NFVO, an O&M, a VNF, a resource manager, a resource user, a resource querier, or a visitor; and the access user level includes one of or a combination of the following: a very important person VIP level, a common user level, or an operator level.

It should be noted that, the performing access control includes performing security control on one of or a combination of the following operations: querying, obtaining a permission, releasing, changing a use quantity, full occupying, or compensating; and the security policy setting includes one of or a combination of the following settings: setting whether virtual resources can access each other, or can be shared with each other, or can compensate each other between sets or security zones.

The security type policy includes allocating a VNF security group and a VNF priority group, configuring a corresponding security level and a corresponding priority, and configuring corresponding security levels, priorities and/or security passwords for different virtual resource access entities or virtual resource access operations of different virtual resource access entities.

The performance isolation policy includes setting an upper limit of a physical resource, a virtual resource, or a resource that is used by a virtual network element, and an upper limit of a computing capability provided for an NFVI or a VNF.

The service or application priority policy includes setting a priority of an APP to ensure resource use of a high-priority APP.

The deployment policy includes policies of loading, scaling, virtual resource allocation, a virtual network virtualization operation for VNF migration, service go-online parameter configuration, and VM virtual resource calculation parameter input, where the virtual network virtualization operation includes network element minimum requirement and accommodation configuration, network element service go-online parameter input, a migration threshold, a load balancing trigger threshold, an upper limit of a quantity of virtual machines allocatable to a domain, a security group, or a site, a VM upper limit of VM scheduling across sites, across NFVOs, or across domains, and the VM virtual resource calculation parameter input policy includes quantity mapping between a VNF and a VM, VNF processing capability setting, an upper limit of a connection quantity, connection bandwidth, VNF running environment setting, a VM performance requirement, a CPU quantity, a quantity of CPU cores, a CPU processing capability, a storage requirement, and a quantity calculation relationship between a service and a resource.

The information reporting policy includes a trigger condition and a filter criterion for reporting VM status information, fault information, physical device status information, or a virtualization operation to a network administration system, specifying signaling status information reporting, specifying an event or a notification that needs to be reported, specifying a quantity of information to be reported, specifying an information reporting trigger threshold, and specifying an information abnormity threshold.

The backup policy includes performing 1:n hot backup, periodically performing 1:n static data backup, and ensuring business continuity and supporting service migration backup, where n is a natural number 1, 2, 3, ...

The simulation program activation policy includes setting a simulation program type or program ID configuration corresponding to redundancy, performance optimization, network scaling, or energy saving, setting a target that a simulation program needs to simulate and test, and setting a start location, a start time period, or a start condition/threshold of a simulation program.

The go-online process policy includes performing, by a VNFM, installation of VNF initial general service software and performing, by an EMS, VNF software downloading and installation, go-online parameter configuration, access network service connection configuration, service go-online testing, and service activation, or performing, by the VNFM, VNF virtualization and performing, by an EMS, VNF go-online parameter configuration, access network service connection configuration, service go-online testing, or service activation, or performing, by the VNFM, VNF virtualization, go-online parameter configuration, access network service connection configuration, service go-online testing, and service activation.

S501: The network administration system sends the policy configuration information to a virtual network element, so that the virtual network element performs service control according to the policy configuration information, or transmits the policy configuration information to a corresponding network element to perform further configuration and management.

In S501, the network administration system sends, to the virtual network element, one of or a combination of the policy configuration information by using one of or a combination of an Os-Nfvo interface, a VeNf-Vnfm interface, a VnEm-Vnfm interface, a VnEm-Nf interface, an Os-Nf interface, an Nfvo-Vnfm interface, a Vnfm-Vi interface, or an Nfvo-Vi interface.

In an example of S501, the NMS sends, to the NFVO by using the Os-Nfvo interface, the policy configuration information to perform related configuration, and the NFVO forwards some or all of the policy configuration information to the VNFM and the VIM, where the NFVO configures the security isolation policy, the security type policy, the performance isolation policy, and the service or application priority policy by using the VNF-Catalog, the NS-Catalog, and the Instance-catalog; the VNFM receives the policy configuration information forwarded by the NFVO, and configures the deployment policy, the information reporting policy, the backup policy, the simulation program activation policy, and the go-online process policy of the VNF; and the VIM receives the policy configuration information forwarded by the NFVO, and configures the security isolation policy, the security type policy, the information reporting policy, and the backup policy.

In another example of S501, the NMS sends, to the NFVO by using the Os-Nfvo interface, the security isolation policy, the security type policy, the performance isolation policy, the service or application priority policy, the deployment policy, the information reporting policy, the backup policy, the simulation program activation policy, and the go-online process policy that are cross-site, cross-domain and/or cross-PLMN; the EMS sends, to the VNFM by using the VnEm-Vnfm interface, the security isolation policy, the security type policy, the service or application priority policy, the deployment policy, the information reporting policy, the simulation program activation policy, and the go-online process policy; the EMS sends, to the VIM by using the VnEm-Nf interface, the security isolation policy, the security type policy, the performance isolation policy, the service or application priority policy, the deployment policy, the information reporting policy, the backup policy, the simulation program activation policy, and the go-online process policy; and the NMS sends, to the VIM by using the Os-Nf interface, the security isolation policy, the security type policy, the performance isolation policy, the information reporting policy, the backup policy, the simulation program activation policy, and the VM virtual resource calculation parameter input policy.

By means of the virtual network policy configuration method in this application, in an NFV deployment process, a virtual network element can receive policy configuration information and perform configuration, so as to resolve a technical problem that in the prior art, when virtualized deployment is performed, a system needs to perform unified and coordinated processing, resulting in low efficiency and slow and unordered deployment. Specifically, in this application, a virtual network element location of policy configuration information is selectively configured in a targeted manner, so that a system resource is allocated and used more properly, and additionally a specific configuration catalog is refined by using policy configuration information, so that NFV deployment can be performed quickly and effectively, thereby increasing virtualization efficiency to a great extent, so as to quickly respond to and process a related service.

In the several embodiments provided in the present invention, it should be understood that the disclosed system, apparatus, or method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely embodiments of this application, and are not intended to limit the scope of this application. An equivalent structural or equivalent process alternation made by using the content of the specification and drawings of this application, or an application of the content of the specification and drawings directly or indirectly to another related technical field, shall fall within the protection scope of this application.

## Claims

1. A virtual network element, wherein the virtual network element comprises:
a receiving module, configured to receive policy configuration information related to administration, operations or maintenance of a network administration system; and
a processing module, configured to perform service control according to the policy configuration information received by the receiving module, wherein the policy configuration information specifically comprises one of or a combination of the following policies: a security isolation policy, a security type policy, a performance isolation policy, a service or application priority policy, a deployment policy, an information reporting policy, a backup policy, a simulation program activation policy, or a go-online process policy.

2. The virtual network element according to claim 1, wherein the security isolation policy comprises:
allocating a virtual resource to different sets or to different security isolation zones, and performing access control or security policy setting for the virtual resource in the different sets or the different security isolation zones.

3. The virtual network element according to claim 2, wherein
when the virtual resource is allocated to the different sets or to the different security isolation zones, the resource is allocated according to one of or a combination of the following rules: according to an identifier of a set or an isolation zone to which a minimum unit of the virtual resource belongs; according to a security level of the virtual resource; or according to a catalog of virtual resources that need to be isolated in the different sets or the different isolation zones, a number corresponding to a designated virtual resource or virtual machine, or a server on which a virtual machine is located; and
that the virtual resource is allocated to a security isolation zone comprises: the virtual resource is allocated to an isolation zone according to a geographic location at which the virtual resource is distributed, or a type of a user or a user group that accesses the virtual resource, or a type of an application that uses the virtual resource, a type of a service that uses the virtual resource, or a number of a user that uses the service.

4. The virtual network element according to claim 2, wherein the performing access control in the different sets or the different security isolation zones comprises:
the virtual resource in the different sets or the different security isolation zones can be accessed only by using an access role, an access user level, or an access password that is separately configured for the different sets or the different security isolation zones, wherein
the access role configured for the security isolation zones can be one of or a combination of the following virtual network elements: a virtual network function manager VNFM, a network function virtualization orchestrator NFVO, an operation and maintenance O&M, a virtual network function VNF, a resource manager, a resource user, a resource querier, or a visitor; and
the access user level comprises one of or a combination of the following: a very important person VIP level, a common user level, or an operator level.

5. The virtual network element according to claim 4, wherein
the performing access control comprises performing security control on one of or a combination of the following operations: querying, obtaining a permission, releasing, changing a use quantity, full occupying, or compensating; and
the security policy setting comprises one of or a combination of the following settings: setting whether virtual resources can access each other, or can be shared with each other, or can compensate each other between the different sets or the different security zones.

6. The virtual network element according to claim 1, wherein
the performance isolation policy comprises setting an upper limit of a physical resource, a virtual resource, or a resource that is used by a virtual network element, and an upper limit of a computing capability provided for a network function virtual infrastructure NFVI or a VNF;
the service or application priority policy comprises setting a priority of a network service application APP to ensure resource use of a high-priority APP;
the deployment policy comprises policies of loading, scaling, virtual resource allocation, a virtual network virtualization operation for VNF migration, service go-online parameter configuration, and VM virtual resource calculation parameter input, wherein the virtual network virtualization operation comprises network element minimum requirement and accommodation configuration, network element service go-online parameter input, a migration threshold, a load balancing trigger threshold, an upper limit of a quantity of virtual machines allocatable to a domain, a security group, or a site, a VM upper limit of VM scheduling across sites, across network function virtualization orchestrators NFVOs, or across domains, and the VM virtual resource calculation parameter input policy comprises quantity mapping between a virtual network element VNF and a VM, VNF processing capability setting, an upper limit of a connection quantity, connection bandwidth, VNF running environment setting, a VM performance requirement, a CPU quantity, a quantity of CPU cores, a CPU processing capability, a storage requirement, and a quantity calculation relationship between a service and a resource;
the information reporting policy comprises a trigger condition and a filter criterion for reporting VM status information, fault information, physical device status information, or a virtualization operation to a network administration system, specifying signaling status information reporting, specifying an event or a notification that needs to be reported, specifying a quantity of information to be reported, specifying an information reporting trigger threshold, and specifying an information abnormity threshold;
the backup policy comprises performing 1:n hot backup, periodically performing 1:n static data backup, ensuring business continuity, and supporting service migration backup, wherein n is a natural number 1, 2, 3, ...;
the simulation program activation policy comprises setting a simulation program type or program identifier ID configuration corresponding to redundancy, performance optimization, network scaling, or energy saving, setting a target that a simulation program needs to simulate and test, and setting a start location, a start time period, or a start condition/threshold of a simulation program; and
the go-online process policy comprises performing, by a VNF manager VNFM, installation of VNF initial general service software and performing, by an element management system EMS, VNF software downloading and installation, go-online parameter configuration, access network service connection configuration, service go-online testing, and service activation, or performing, by the VNFM, VNF virtualization and performing, by an EMS, VNF go-online parameter configuration, access network service connection configuration, service go-online testing, or service activation, or performing, by the VNFM, VNF virtualization, go-online parameter configuration, access network service connection configuration, service go-online testing, and service activation.

7. The virtual network element according to any one of claims 1 to 6, wherein the receiving module specifically receives one of or a combination of the policy configuration information by using one of or a combination of an Os-Nfvo interface, a VeNf-Vnfm interface, a VnEm-Vnfm interface, a VnEm-Nf interface, an Os-Nf interface, an Nfvo-Vnfm interface, a Vnfm-Vi interface, or an Nfvo-Vi interface, wherein
the Os-Nfvo interface is located between a network management system NMS and the network function virtualization orchestrator NFVO, the VeNf-Vnfm interface is located between the virtual network function VNF and the VNF manager VNFM, the VnEm-Vnfm interface is located between the element management system EMS and the VNFM, the VnEm-Nf interface is located between the EMS and a virtualized infrastructure manager VIM, the Os-Nf interface is located between the NMS and the VIM, the Nfvo-Vnfm interface is located between the NFVO and the VNFM, the Vnfm-Vi interface is located between the VNFM and the VIM, and the Nfvo-Vi interface is located between the NFVO and the VIM.

8. The virtual network element according to claim 7, wherein the virtual network element comprises the NFVO, the VNFM, and the VIM; and
a receiving module of the NFVO is specifically configured to: receive, by using the Os-Nfvo interface, the policy configuration information to perform related configuration, and forward some or all of the policy configuration information to the VNFM and the VIM, wherein
the NFVO configures the security isolation policy, the security type policy, the performance isolation policy, and the service or application priority policy by using a VNF catalog VNF-Catalog, a network service catalog NS-Catalog, and an instance catalog Instance-catalog;
the VNFM receives the policy configuration information forwarded by the NFVO, and configures the deployment policy, the information reporting policy, the backup policy, the simulation program activation policy, and the go-online process policy of the VNF; and
the VIM receives the policy configuration information forwarded by the NFVO, and configures the security isolation policy, the security type policy, the information reporting policy, and the backup policy.

9. The virtual network element according to claim 7, wherein the virtual network element comprises the NFVO, the VNFM, and the VIM;
a receiving module of the NFVO is specifically configured to receive, by using the Os-Nfvo interface, the security isolation policy, the security type policy, the performance isolation policy, the service or application priority policy, the deployment policy, the information reporting policy, the backup policy, the simulation program activation policy, and the go-online process policy that are of the NMS and that are cross-site, cross-domain and/or cross-public land mobile network PLMN;
a receiving module of the VNFM is specifically configured to receive, by using the VnEm-Vnfm interface, the security isolation policy, the security type policy, the service or application priority policy, the deployment policy, the information reporting policy, the simulation program activation policy, and the go-online process policy that are of the EMS;
a receiving module of the VIM is specifically configured to receive, by using the VnEm-Nf interface, the security isolation policy, the security type policy, the performance isolation policy, the service or application priority policy, the deployment policy, the information reporting policy, the backup policy, the simulation program activation policy, and the go-online process policy that are of the EMS; and
the receiving module of the VIM is specifically configured to receive, by using the Os-Nf interface, the security isolation policy, the security type policy, the performance isolation policy, the information reporting policy, the backup policy, the simulation program activation policy, and the VM virtual resource calculation parameter input policy that are of the NMS.

10. A virtual network policy configuration method, wherein the configuration method comprises:
receiving, by a virtual network element, policy configuration information related to administration, operations or maintenance of a network administration system; and
performing, by the virtual network element, service control according to the policy configuration information, wherein
the policy configuration information specifically comprises one of or a combination of the following policies:
a security isolation policy, a security type policy, a performance isolation policy, a service or application priority policy, a deployment policy, an information reporting policy, a backup policy, a simulation program activation policy, or a go-online process policy.

11. The configuration method according to claim 10, wherein
the security isolation policy comprises allocating a virtual resource to different sets or to different security isolation zones, and performing access control or security policy setting for the virtual resource in the sets or the isolation zones.

12. The configuration method according to claim 11, wherein
when the virtual resource is allocated to the different sets or to the different security isolation zones, the resource is allocated according to one of or a combination of the following methods: setting an identifier of a set or an isolation zone to which a minimum unit of the virtual resource belongs; setting a security level; or setting, in the sets or the isolation zones, a catalog of virtual resources that need to be isolated, and specifying a number corresponding to a specific virtual resource or virtual machine, or a server on which the virtual resource or virtual machine is located; and
that the virtual resource is allocated to a establishing security isolation zone comprises: the virtual resource is allocated to an isolation zone according to a geographic location at which the virtual resource is distributed, or a type of a user or a user group that accesses the virtual resource, or a type of an application or a service that uses the virtual resource, and/or a number of a user that uses the service.

13. The configuration method according to claim 11, wherein in a process of performing access control on a set or a security isolation zone:
a virtual resource in the set or the security isolation zone can be accessed only by using an access role, an access user level, or an access password that is configured for the set or the security isolation zone, wherein
the access role configured for the security isolation zone can be one of or a combination of the following virtual network elements: a virtual network function manager VNFM, a network function virtualization orchestrator NFVO, an operation and maintenance O&M, a virtual network function VNF, a resource manager, a resource user, a resource querier, or a visitor; and
the access user level comprises one of or a combination of the following: a very important person VIP level, a common user level, or an operator level.

14. The configuration method according to claim 13, wherein
the performing access control comprises performing security control on one of or a combination of the following operations: querying, obtaining a permission, releasing, changing a use quantity, full occupying, or compensating; and
the security policy setting comprises one of or a combination of the following settings: setting whether virtual resources can access each other, or can be shared with each other, or can compensate each other between sets or security zones.

15. The configuration method according to claim 10, wherein
the performance isolation policy comprises setting an upper limit of a physical resource, a virtual resource, or a resource that is used by a virtual network element, and an upper limit of a computing capability provided for a network function virtual infrastructure NFVI or a VNF;
the service or application priority policy comprises setting a priority of a network service application APP to ensure resource use of a high-priority APP;
the deployment policy comprises policies of loading, scaling, virtual resource allocation, a virtual network virtualization operation for VNF migration, service go-online parameter configuration, and VM virtual resource calculation parameter input, wherein the virtual network virtualization operation comprises network element minimum requirement and accommodation configuration, network element service go-online parameter input, a migration threshold, a load balancing trigger threshold, an upper limit of a quantity of virtual machines allocatable to a domain, a security group, or a site, a VM upper limit of VM scheduling across sites, across network function virtualization orchestrators NFVOs, or across domains, and the VM virtual resource calculation parameter input policy comprises quantity mapping between a virtual network element VNF and a VM, VNF processing capability setting, an upper limit of a connection quantity, connection bandwidth, VNF running environment setting, a VM performance requirement, a CPU quantity, a quantity of CPU cores, a CPU processing capability, a storage requirement, and a quantity calculation relationship between a service and a resource;
the information reporting policy comprises a trigger condition and a filter criterion for reporting VM status information, fault information, physical device status information, or a virtualization operation to a network administration system, specifying signaling status information reporting, specifying an event or a notification that needs to be reported, specifying a quantity of information to be reported, specifying an information reporting trigger threshold, and specifying an information abnormity threshold;
the backup policy comprises performing 1:n hot backup, periodically performing 1:n static data backup, and ensuring business continuity and supporting service migration backup, wherein n is a natural number 1, 2, 3, ...;
the simulation program activation policy comprises setting a simulation program type or program identifier ID configuration corresponding to redundancy, performance optimization, network scaling, or energy saving, setting a target that a simulation program needs to simulate and test, and setting a start location, a start time period, or a start condition/threshold of a simulation program; and
the go-online process policy comprises performing, by a VNF manager VNFM, installation of VNF initial general service software and performing, by an element management system EMS, VNF software downloading and installation, go-online parameter configuration, access network service connection configuration, service go-online testing, and service activation, or performing, by the VNFM, VNF virtualization and performing, by an EMS, VNF go-online parameter configuration, access network service connection configuration, service go-online testing, or service activation, or performing, by the VNFM, VNF virtualization, go-online parameter configuration, access network service connection configuration, service go-online testing, and service activation.

16. The configuration method according to any one of claims 10 to 15, wherein the receiving, by a virtual network element, policy configuration information comprises:
receiving, by the virtual network element, one of or a combination of the policy configuration information by using one of or a combination of an Os-Nfvo interface, a VeNf-Vnfm interface, a VnEm-Vnfm interface, a VnEm-Nf interface, an Os-Nf interface, an Nfvo-Vnfm interface, a Vnfm-Vi interface, or an Nfvo-Vi interface, wherein
the Os-Nfvo interface is located between a network management system NMS and the network function virtualization orchestrator NFVO, the VeNf-Vnfm interface is located between the virtual network function VNF and the VNF manager VNFM, the VnEm-Vnfm interface is located between the element management system EMS and the VNFM, the VnEm-Nf interface is located between the EMS and a virtualized infrastructure manager VIM, the Os-Nf interface is located between the NMS and the VIM, the Nfvo-Vnfm interface is located between the NFVO and the VNFM, the Vnfm-Vi interface is located between the VNFM and the VIM, and the Nfvo-Vi interface is located between the NFVO and the VIM.

17. The configuration method according to claim 16, wherein the virtual network element comprises the NFVO, the VNFM, and the VIM; and the step of receiving, by the virtual network element, the policy configuration information specifically comprises:
receiving, by the NFVO by using the Os-Nfvo interface, the policy configuration information to perform related configuration, and forwarding some or all of the policy configuration information to the VNFM and the VIM, wherein
the NFVO configures the security isolation policy, the security type policy, the performance isolation policy, and the service or application priority policy by using a VNF catalog VNF-Catalog, a network service catalog NS-Catalog, and an instance catalog Instance-catalog;
the VNFM receives the policy configuration information forwarded by the NFVO, and configures the deployment policy, the information reporting policy, the backup policy, the simulation program activation policy, and the go-online process policy of the VNF; and
the VIM receives the policy configuration information forwarded by the NFVO, and configures the security isolation policy, the security type policy, the information reporting policy, and the backup policy.

18. The configuration method according to claim 16, wherein the virtual network element comprises the NFVO, the VNFM, and the VIM; and the step of receiving, by the virtual network element, the policy configuration information specifically comprises:
receiving, by the NFVO by using the Os-Nfvo interface, the security isolation policy, the security type policy, the performance isolation policy, the service or application priority policy, the deployment policy, the information reporting policy, the backup policy, the simulation program activation policy, and the go-online process policy that are of the NMS and that are cross-site, cross-domain and/or cross-public land mobile network PLMN;
receiving, by the VNFM by using the VnEm-Vnfm interface, the security isolation policy, the security type policy, the service or application priority policy, the deployment policy, the information reporting policy, the simulation program activation policy, and the go-online process policy that are of the EMS;
receiving, by the VIM by using the VnEm-Nf interface, the security isolation policy, the security type policy, the performance isolation policy, the service or application priority policy, the deployment policy, the information reporting policy, the backup policy, the simulation program activation policy, and the go-online process policy that are of the EMS; and
receiving, by the VIM by using the Os-Nf interface, the security isolation policy, the security type policy, the performance isolation policy, the information reporting policy, the backup policy, the simulation program activation policy, and the VM virtual resource calculation parameter input policy that are of the NMS.

19. A network administration system, wherein the network administration system comprises:
an obtaining module, configured to obtain policy configuration information related to administration, operations or maintenance;
a sending module, configured to send, to a virtual network element, the policy configuration information obtained by the obtaining module, so that the virtual network element performs service control according to the policy configuration information, wherein the policy configuration information specifically comprises one of or a combination of the following policies:
a security isolation policy, a security type policy, a performance isolation policy, a service or application priority policy, a deployment policy, an information reporting policy, a backup policy, a simulation program activation policy, or a go-online process policy.

20. The network administration system according to claim 19, wherein the security isolation policy comprises:
allocating a virtual resource to different sets or to different security isolation zones, and performing access control or security policy setting for the virtual resource in the sets or the isolation zones.

21. The network administration system according to claim 20, wherein
when the virtual resource is allocated to the different sets or to the different security isolation zones, the resource is allocated according to one of or a combination of the following methods: setting an identifier of a set or an isolation zone to which a minimum unit of the virtual resource belongs; setting a security level; or setting, in the sets or the isolation zones, a catalog of virtual resources that need to be isolated, and specifying a number corresponding to a specific virtual resource or virtual machine, or a server on which the virtual resource or virtual machine is located; and
that the virtual resource is allocated to a security isolation zone comprises: the virtual resource is allocated to an isolation zone according to a geographic location at which the virtual resource is distributed, or a type of a user or a user group that accesses the virtual resource, or a type of an application or a service that uses the virtual resource, and/or a number of a user that uses the service.

22. The network administration system according to claim 20, wherein in a process of performing access control on a set or a security isolation zone:
a virtual resource in the set or the security isolation zone can be accessed only by using an access role, an access user level, or an access password that is configured for the set or the security isolation zone, wherein
the access role configured for the security isolation zone can be one of or a combination of the following virtual network elements: a virtual network function manager VNFM, a network function virtualization orchestrator NFVO, an operation and maintenance O&M, a virtual network function VNF, a resource manager, a resource user, a resource querier, or a visitor; and
the access user level comprises one of or a combination of the following: a very important person VIP level, a common user level, or an operator level.

23. The network administration system according to claim 22, wherein
the performing access control comprises performing security control on one of or a combination of the following operations: querying, obtaining a permission, releasing, changing a use quantity, full occupying, or compensating; and
the security policy setting comprises one of or a combination of the following settings: setting whether virtual resources can access each other, or can be shared with each other, or can compensate each other between sets or security zones.

24. The network administration system according to claim 19, wherein
the performance isolation policy comprises setting an upper limit of a physical resource, a virtual resource, or a resource that is used by a virtual network element, and an upper limit of a computing capability provided for a network function virtual infrastructure NFVI or a VNF;
the service or application priority policy comprises setting a priority of a network service application APP to ensure resource use of a high-priority APP;
the deployment policy comprises policies of loading, scaling, virtual resource allocation, a virtual network virtualization operation for VNF migration, service go-online parameter configuration, and VM virtual resource calculation parameter input, wherein the virtual network virtualization operation comprises network element minimum requirement and accommodation configuration, network element service go-online parameter input, a migration threshold, a load balancing trigger threshold, an upper limit of a quantity of virtual machines allocatable to a domain, a security group, or a site, a VM upper limit of VM scheduling across sites, across network function virtualization orchestrators NFVOs, or across domains, and the VM virtual resource calculation parameter input policy comprises quantity mapping between a virtual network element VNF and a VM, VNF processing capability setting, an upper limit of a connection quantity, connection bandwidth, VNF running environment setting, a VM performance requirement, a CPU quantity, a quantity of CPU cores, a CPU processing capability, a storage requirement, and a quantity calculation relationship between a service and a resource;
the information reporting policy comprises a trigger condition and a filter criterion for reporting VM status information, fault information, physical device status information, or a virtualization operation to a network administration system, specifying signaling status information reporting, specifying an event or a notification that needs to be reported, specifying a quantity of information to be reported, specifying an information reporting trigger threshold, and specifying an information abnormity threshold;
the backup policy comprises performing 1:n hot backup, periodically performing 1:n static data backup, and ensuring business continuity and supporting service migration backup, wherein n is a natural number 1, 2, 3, ...;
the simulation program activation policy comprises setting a simulation program type or program identifier ID configuration corresponding to redundancy, performance optimization, network scaling, or energy saving, setting a target that a simulation program needs to simulate and test, and setting a start location, a start time period, or a start condition/threshold of a simulation program; and
the go-online process policy comprises performing, by a VNF manager VNFM, installation of VNF initial general service software and performing, by an element management system EMS, VNF software downloading and installation, go-online parameter configuration, access network service connection configuration, service go-online testing, and service activation, or performing, by the VNFM, VNF virtualization and performing, by an EMS, VNF go-online parameter configuration, access network service connection configuration, service go-online testing, or service activation, or performing, by the VNFM, VNF virtualization, go-online parameter configuration, access network service connection configuration, service go-online testing, and service activation.

25. The network administration system according to any one of claims 19 to 24, wherein the network administration system comprises a network management system NMS and the element management system EMS, and the sending module is specifically configured to send one of or a combination of the policy configuration information to the virtual network element by using one of or a combination of an Os-Nfvo interface, a VeNf-Vnfm interface, a VnEm-Vnfm interface, a VnEm-Nf interface, an Os-Nf interface, an Nfvo-Vnfm interface, a Vnfm-Vi interface, or an Nfvo-Vi interface, wherein
the Os-Nfvo interface is located between the NMS and the network function virtualization orchestrator NFVO, the VeNf-Vnfm interface is located between the virtual network function VNF and the VNF manager VNFM, the VnEm-Vnfm interface is located between the EMS and the VNFM, the VnEm-Nf interface is located between the EMS and a virtualized infrastructure manager VIM, the Os-Nf interface is located between the NMS and the VIM, the Nfvo-Vnfm interface is located between the NFVO and the VNFM, the Vnfm-Vi interface is located between the VNFM and the VIM, and the Nfvo-Vi interface is located between the NFVO and the VIM.

26. The network administration system according to claim 25, wherein the virtual network element comprises the NFVO, the VNFM, and the VIM; and
a sending module of the NMS is specifically configured to: by using the Os-Nfvo interface, send the policy configuration information to the NFVO to perform related configuration, wherein the NFVO forwards some or all of the policy configuration information to the VNFM and the VIM, wherein
the NFVO configures the security isolation policy, the security type policy, the performance isolation policy, and the service or application priority policy by using a VNF catalog VNF-Catalog, a network service catalog NS-Catalog, and an instance catalog Instance-catalog;
the VNFM receives the policy configuration information forwarded by the NFVO, and configures the deployment policy, the information reporting policy, the backup policy, the simulation program activation policy, and the go-online process policy of the VNF; and
the VIM receives the policy configuration information forwarded by the NFVO, and configures the security isolation policy, the security type policy, the information reporting policy, and the backup policy.

27. The network administration system according to claim 25, wherein the virtual network element comprises the NFVO, the VNFM, and the VIM;
a sending module of the NMS is specifically configured to send, to the NFVO by using the Os-Nfvo interface, the security isolation policy, the security type policy, the performance isolation policy, the service or application priority policy, the deployment policy, the information reporting policy, the backup policy, the simulation program activation policy, and the go-online process policy that are cross-site, cross-domain and/or cross-public land mobile network PLMN;
a sending module of the EMS is specifically configured to send, to the VNFM by using the VnEm-Vnfm interface, the security isolation policy, the security type policy, the service or application priority policy, the deployment policy, the information reporting policy, the simulation program activation policy, and the go-online process policy;
the sending module of the EMS is specifically configured to send, to the VIM by using the VnEm-Nf interface, the security isolation policy, the security type policy, the performance isolation policy, the service or application priority policy, the deployment policy, the information reporting policy, the backup policy, the simulation program activation policy, and the go-online process policy; and
the sending module of the NMS is specifically configured to send, to the VIM by using the Os-Nf interface, the security isolation policy, the security type policy, the performance isolation policy, the information reporting policy, the backup policy, the simulation program activation policy, and the VM virtual resource calculation parameter input policy.

28. A virtual network policy configuration method, wherein the configuration method comprises:
obtaining, by a network administration system, policy configuration information related to administration, operations or maintenance;
sending, by the network administration system to a virtual network element, the policy configuration information, so that the virtual network element performs service control according to the policy configuration information, wherein the policy configuration information specifically comprises one of or a combination of the following policies:
a security isolation policy, a security type policy, a performance isolation policy, a service or application priority policy, a deployment policy, an information reporting policy, a backup policy, a simulation program activation policy, or a go-online process policy.

29. The configuration method according to claim 28, wherein
the security isolation policy comprises allocating a virtual resource to different sets or to different security isolation zones, and performing access control or security policy setting for the virtual resource in the sets or the isolation zones.

30. The configuration method according to claim 29, wherein
when the virtual resource is allocated to the different sets or to the different security isolation zones, the resource is allocated according to one of or a combination of the following methods: setting an identifier of a set or an isolation zone to which a minimum unit of the virtual resource belongs; setting a security level; or setting, in the sets or the isolation zones, a catalog of virtual resources that need to be isolated, and specifying a number corresponding to a specific virtual resource or virtual machine, or a server on which the virtual resource or virtual machine is located; and
that the virtual resource is allocated to a security isolation zone comprises: the virtual resource is allocated to an isolation zone according to a geographic location at which the virtual resource is distributed, or a type of a user or a user group that accesses the virtual resource, or a type of an application or a service that uses the virtual resource, and/or a number of a user that uses the service.

31. The configuration method according to claim 29, wherein in a process of performing access control on a set or a security isolation zone:
a virtual resource in the set or the security isolation zone can be accessed only by using an access role, an access user level, or an access password that is configured for the set or the security isolation zone, wherein
the access role configured for the security isolation zone can be one of or a combination of the following virtual network elements: a virtual network function manager VNFM, a network function virtualization orchestrator NFVO, an operation and maintenance O&M, a virtual network function VNF, a resource manager, a resource user, a resource querier, or a visitor; and
the access user level comprises one of or a combination of the following: a very important person VIP level, a common user level, or an operator level.

32. The configuration method according to claim 31, wherein
the performing access control comprises performing security control on one of or a combination of the following operations: querying, obtaining a permission, releasing, changing a use quantity, full occupying, or compensating; and
the security policy setting comprises one of or a combination of the following settings: setting whether virtual resources can access each other, or can be shared with each other, or can compensate each other between sets or security zones.

33. The configuration method according to claim 28, wherein
the performance isolation policy comprises setting an upper limit of a physical resource, a virtual resource, or a resource that is used by a virtual network element, and an upper limit of a computing capability provided for a network function virtual infrastructure NFVI or a VNF;
the service or application priority policy comprises setting a priority of a network service application APP to ensure resource use of a high-priority APP;
the deployment policy comprises policies of loading, scaling, virtual resource allocation, a virtual network virtualization operation for VNF migration, service go-online parameter configuration, and VM virtual resource calculation parameter input, wherein the virtual network virtualization operation comprises network element minimum requirement and accommodation configuration, network element service go-online parameter input, a migration threshold, a load balancing trigger threshold, an upper limit of a quantity of virtual machines allocatable to a domain, a security group, or a site, a VM upper limit of VM scheduling across sites, across network function virtualization orchestrators NFVOs, or across domains, and the VM virtual resource calculation parameter input policy comprises quantity mapping between a virtual network element VNF and a VM, VNF processing capability setting, an upper limit of a connection quantity, connection bandwidth, VNF running environment setting, a VM performance requirement, a CPU quantity, a quantity of CPU cores, a CPU processing capability, a storage requirement, and a quantity calculation relationship between a service and a resource;
the information reporting policy comprises a trigger condition and a filter criterion for reporting VM status information, fault information, physical device status information, or a virtualization operation to a network administration system, specifying signaling status information reporting, specifying an event or a notification that needs to be reported, specifying a quantity of information to be reported, specifying an information reporting trigger threshold, and specifying an information abnormity threshold;
the backup policy comprises performing 1:n hot backup, periodically performing 1:n static data backup, and ensuring business continuity and supporting service migration backup, wherein n is a natural number 1, 2, 3, ...;
the simulation program activation policy comprises setting a simulation program type or program identifier ID configuration corresponding to redundancy, performance optimization, network scaling, or energy saving, setting a target that a simulation program needs to simulate and test, and setting a start location, a start time period, or a start condition/threshold of a simulation program; and
the go-online process policy comprises performing, by a VNF manager VNFM, installation of VNF initial general service software and performing, by an element management system EMS, VNF software downloading and installation, go-online parameter configuration, access network service connection configuration, service go-online testing, and service activation, or performing, by the VNFM, VNF virtualization and performing, by an EMS, VNF go-online parameter configuration, access network service connection configuration, service go-online testing, or service activation, or performing, by the VNFM, VNF virtualization, go-online parameter configuration, access network service connection configuration, service go-online testing, and service activation.

34. The configuration method according to any one of claims 28 to 33, wherein the sending, by the network administration system to a virtual network element, the policy configuration information comprises:
sending, by the network administration system to the virtual network element, one of or a combination of the policy configuration information by using one of or a combination of an Os-Nfvo interface, a VeNf-Vnfm interface, a VnEm-Vnfm interface, a VnEm-Nf interface, an Os-Nf interface, an Nfvo-Vnfm interface, a Vnfm-Vi interface, or an Nfvo-Vi interface, wherein
the network administration system comprises a network management system NMS and the element management system EMS, the Os-Nfvo interface is located between the NMS and the network function virtualization orchestrator NFVO, the VeNf-Vnfm interface is located between the virtual network function VNF and the VNF manager VNFM, the VnEm-Vnfm interface is located between the EMS and the VNFM, the VnEm-Nf interface is located between the EMS and a virtualized infrastructure manager VIM, the Os-Nf interface is located between the NMS and the VIM, the Nfvo-Vnfm interface is located between the NFVO and the VNFM, the Vnfm-Vi interface is located between the VNFM and the VIM, and the Nfvo-Vi interface is located between the NFVO and the VIM.

35. The configuration method according to claim 34, wherein the virtual network element comprises the NFVO, the VNFM, and the VIM; and the step of sending, by the network administration system to a virtual network element, the policy configuration information specifically comprises:
sending, by the NMS by using the Os-Nfvo interface, the policy configuration information to the NFVO to perform related configuration, wherein the NFVO forwards some or all of the policy configuration information to the VNFM and the VIM, wherein
the NFVO configures the security isolation policy, the security type policy, the performance isolation policy, and the service or application priority policy by using a VNF catalog VNF-Catalog, a network service catalog NS-Catalog, and an instance catalog Instance-catalog;
the VNFM receives the policy configuration information forwarded by the NFVO, and configures the deployment policy, the information reporting policy, the backup policy, the simulation program activation policy, and the go-online process policy of the VNF; and
the VIM receives the policy configuration information forwarded by the NFVO, and configures the security isolation policy, the security type policy, the information reporting policy, and the backup policy.

36. The configuration method according to claim 34, wherein the virtual network element comprises the NFVO, the VNFM, and the VIM; and the step of sending, by the network administration system to a virtual network element, the policy configuration information specifically comprises:
sending, by the NMS, to the NFVO by using the Os-Nfvo interface, the security isolation policy, the security type policy, the performance isolation policy, the service or application priority policy, the deployment policy, the information reporting policy, the backup policy, the simulation program activation policy, and the go-online process policy that are cross-site, cross-domain and/or cross-public land mobile network PLMN;
sending, by the EMS, to the VNFM by using the VnEm-Vnfm interface, the security isolation policy, the security type policy, the service or application priority policy, the deployment policy, the information reporting policy, the simulation program activation policy, and the go-online process policy;
sending, by the EMS, to the VIM by using the VnEm-Nf interface, the security isolation policy, the security type policy, the performance isolation policy, the service or application priority policy, the deployment policy, the information reporting policy, the backup policy, the simulation program activation policy, and the go-online process policy; and
sending, by the NMS, to the VIM by using the Os-Nf interface, the security isolation policy, the security type policy, the performance isolation policy, the information reporting policy, the backup policy, the simulation program activation policy, and the VM virtual resource calculation parameter input policy.

37. A virtual network policy configuration system, wherein the configuration system comprises the virtual network element according to any one of claims 1 to 9 and the network administration system according to any one of claims 19 to 27, and the virtual network element receives policy configuration information that is related to administration, operations or maintenance and that is sent by the network administration system, so as to perform service control according to the policy configuration information.
